(19) Europäisches Patentamt
European Patent Office
Office européen des brevets

(11) EP 0 512 748 B1

(12) **EUROPEAN PATENT SPECIFICATION**

(45) Date of publication and mention
of the grant of the patent:
**11.11.1998 Bulletin 1998/46**

(51) Int Cl.[6]: **H04N 9/64**, H04N 9/66,
H04N 5/60

(21) Application number: **92303892.1**

(22) Date of filing: **30.04.1992**

(54) **Method and apparatus for signal processing**

Verfahren zur Signalverarbeitung

Méthode de traitement de signal

(84) Designated Contracting States:
**AT DE ES FR GB IT NL SE**

(30) Priority: **03.05.1991 GB 9109617**

(43) Date of publication of application:
**11.11.1992 Bulletin 1992/46**

(73) Proprietor: **TEXAS INSTRUMENTS LIMITED**
**Bedford MK41 7PA (GB)**

(72) Inventors:
- **Ritchie, James Kenneth Alexander**
  **Bedford, MK42 0LR (GB)**
- **Abbott, David**
  **Bedford, MK41 7YB (GB)**
- **Anderson, Adrian**
  **Chepstow, Gwent NG6 6QW (GB)**
- **Parris, Clifford**
  **Tintern, Gwent NP6 6TX (GB)**

(74) Representative: **Abbott, David John et al**
**Abel & Imray**
**Northumberland House**
**303-306 High Holborn**
**London, WC1V 7LH (GB)**

(56) References cited:
**WO-A-89/04576**

- ELEKTRONIK, vol.39, no.6, 16 March, 1990, M nchen, DE, XP000102222, pages 50-54,56; T. HILPERT et al.: 'Digitaler Multistandard-Audio-Chipsatz'
- ELEKTOR ELECTRONICS, May, 1992, XP000290987, pages 34-38,39-42; R. KRIJGSMAN: 'NICAM decoder'
- BBC RESEARCH DEPARTMENT REPORT, no.6, 1990, Tadworth, GB, XP000208352, pages A,B,C,1-27; A.J. BOWER: 'NICAM 728 - Digital two-channel sound for terrestrial television'
- ELECTRONIC COMPONENTS and APPLICATIONS, vol.10, no.3, Eindhoven, NL, XP000288521, pages 121-127; P. DOUBLE: 'NICAM-728 two-channel digital TV sound'

## Description

The present invention relates to signal processing and in particular to the digital processing of signals in a selected band of frequencies.

It is proposed to transmit high fidelity stereo sound signals in digital form in a television broadcast signal using a system known as NICAM 728 for which a specification has been published. In that system, the two sound signals forming the stereo pair are sampled, digitized, formed into digital frames and modulated using differential quadrature phase shift key (DQPSK) on to a carrier. The modulation is 4-state phase modulation in which each change of state conveys two data bits.

There are three versions of the system known as I, B and G respectively which differ from one another in the offset of the carrier for the NICAM signal from the broadcast carrier and the spectrum shaping. In the I system, the frequency offset is 6.552 MHz with a hundred per cent cosine roll-off split equally between the transmitter and the receiver. In the B and G systems, the frequency offset is 5.85 MHz with forty per cent cosine roll-off filtering. The B and G systems differ from one another in the separation between channels. In the B system, the channel separation is 7 MHz and in the G system it is 8 MHz.

As the NICAM 728 signal is additional to the television signal with its colour sub-carrier and FM sound, a television receiver for receiving the NICAM 728 signals requires additional circuitry for selecting and demodulating that signal. It would of course be possible to construct the demodulator using conventional techniques, but that would be relatively expensive. It is therefore an object of the present invention to enable the production of a selector and decoder for NICAM signals which is relatively less expensive and can possibly be constructed in the form of one or more integrated circuits with a minimum of additional components.

PCT Patent Application WO-A-89/04576 (Deutsche ITT) discloses a sound channel circuit for operation in accordance with television sound transmission standards including the NICAM standard. The circuit contains an anti-aliasing low-pass filter which receives and filters an analog sound and video signal. The filtered signal is then digitised by an analog-to-digital converter which feeds a bandpass filter. The out put of the bandpass filter is then in turn provided at the input of a decimator whose clock is derived by dividing the frequency of the sampling signal by an integer such that the useful band will not be effected by decimation. However, this document does not disclose the removal of samples to maintain synchronisation of the matched filters.

According to one aspect of the present invention there is provided signal processing apparatus comprising; sampling means for sampling an input signal to produce a sequence of samples, said sampling means converting said sequence of samples to a digital signal; first filtering means for filtering said digital signal, said first filtering means producing a filtered signal indicative thereof; selecting means for selecting at least one sample from said sequence of samples and for producing a selected signal representative of said remaining samples; second filtering means for filtering said selected signal representing said remaining samples and for producing a filtered digital signal indicative thereof; and digital signal processing means responsive to said filtered digital signal received from said second filtering means, said digital processing means being arranged for producing an output signal having a predefined band of frequencies within a predetermined spectrum shaping.

According to a second aspect of the present invention there is provided a method of processing an input signal comprising; sampling an input signal to produce a sequence of samples and converting said sequence of samples to a digital signal; filtering said digital signal and to produce a filtered signal indicative thereof; selecting at least one sample from said sequence of samples and producing a selected signal representing said remaining samples; filtering said selected signal representing said remaining samples and producing a filtered digital signal indicative thereof; and providing digital signal processing means responsive to said filtered digital signal to produce an output signal having a predefined band of frequencies within a predetermined spectrum shaping.

The first digital filtering means may have a peak in the desired frequency band and one or more troughs in respective frequency bands which overlie the desired frequency band and as a result of the operation of the selecting means. A suitable form for the first digital filtering means is a plurality of comb filters in cascade. The selecting means may be arranged to select one sample from each group of three samples.

The input signal may include representation of symbol at a second repetition rate which are derived from samples taken from an original signal at a first repetition rate, the sampling rate of the sampling and digitizing means may be a multiple of the first repetition rate and the operation of the selecting means may be modified periodically so that the mean repetition rate of the selected digital signal is a multiple of the second repetition rate. In the example of the invention to be described, the input signal is sampled at 16,384 kHz which is 512 x 32 kHz, the sampling rate used to produce the NICAM 728 signal. The symbol rate of the NICAM 728 signal is 364 kHz with the result that the number of samples per is 45 $1/_{91}$. In order that all parts of the system may be synchronised, the selecting means is adjusted to discard one sample after every 45 symbols.

Automatic gain control may be applied to an amplifier feeding the input signal to the sampling and digitizing means so as to reduce the dynamic range that the digitizing means has to handle. The automatic gain control signal be derived by periodically processing samples from the signals from the second digital filtering means and producing a pulse width modulated output signal from the processed signals which can be smoothed to produce the automatic gain control signal. The digitizing means may produce an overload signal when the input signal reaches a maximum value that can be digitized and that overload signal may be used to modify the automatic gain control signal.

The input signal may be a quadrature phase modulated signal, for example a NICAM 728 signal and the digital signal processing means may operate as a demodulator for such a signal and include two matched filters for the quadrature components of the signal and a rotator means responsive to the outputs of the matched filters to bring the signal to a reference phase. The signal processing means may subdivide the signals into groups representing symbols and may be arranged to adjust the position of that subdivision in response to the energy content of the groups.

The apparatus may comprise a suitably programmed microprocessor. The microprocessor may include two separate but linked processing units for respectively processing the two quadrature components.

An example of apparatus for demodulating a NICAM 728 system signal will now be described with reference to the accompanying drawings, of which:-

FIGURE 1 is a diagram of the architecture of the apparatus;
FIGURE 2 illustrates the operation of the first digital filtering means, the anti-alias filter;
FIGURE 3 shows the selecting means;
FIGURE 4 shows the structure of the processing engine of Figure 1;
FIGURE 5 symbols shows the I channel processing arm of Figure 4 and Figure 6 shows the Q processing arm of Figure 4;
FIGURE 7 shows the carrier tracking loop;
FIGUREs 8 and 9 show the alternative forms of loop filter for the carrier tracking loop;

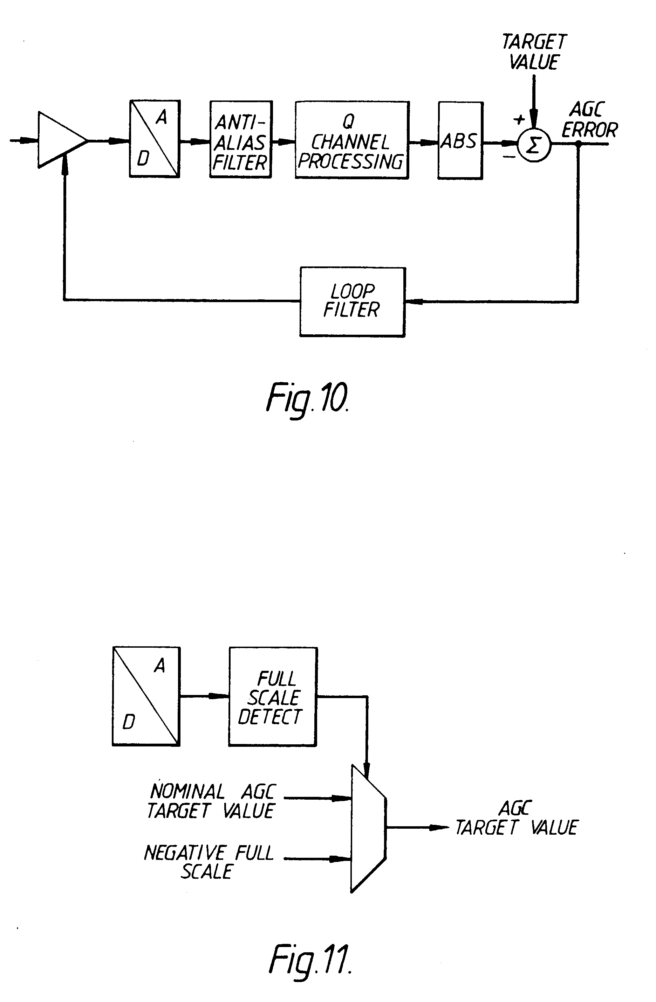

FIGURE 10 shows the automatic gain control loop;
FIGURE 11 shows the automatic gain control overload protection circuit;

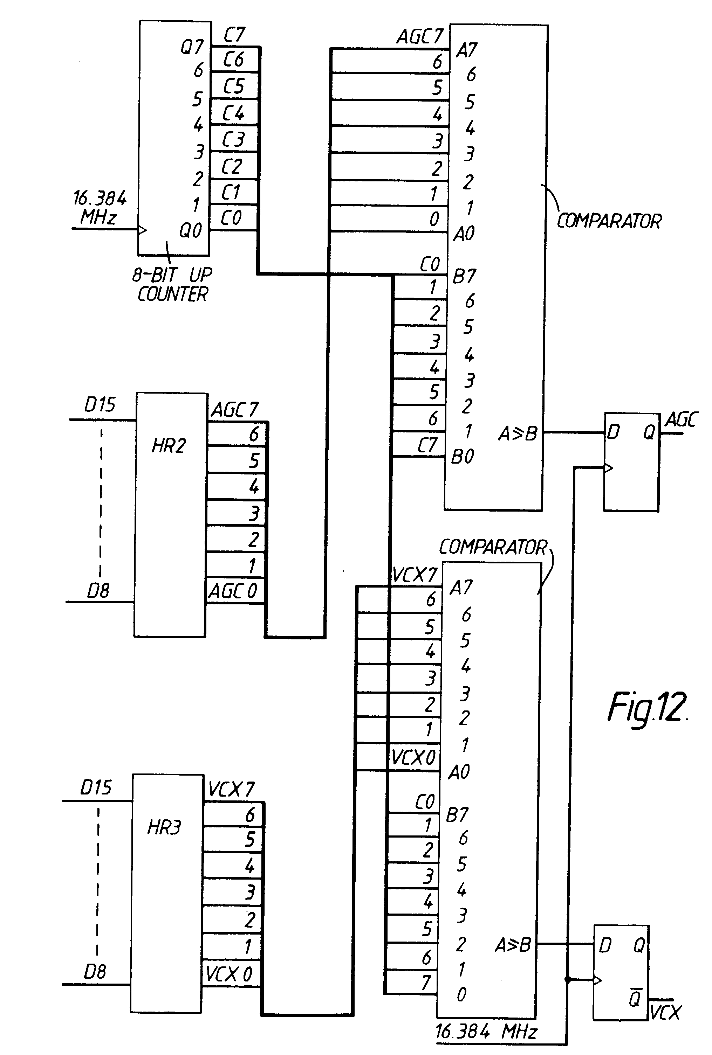

FIGURE 12 shows the pulse width modulators of Figure 1;

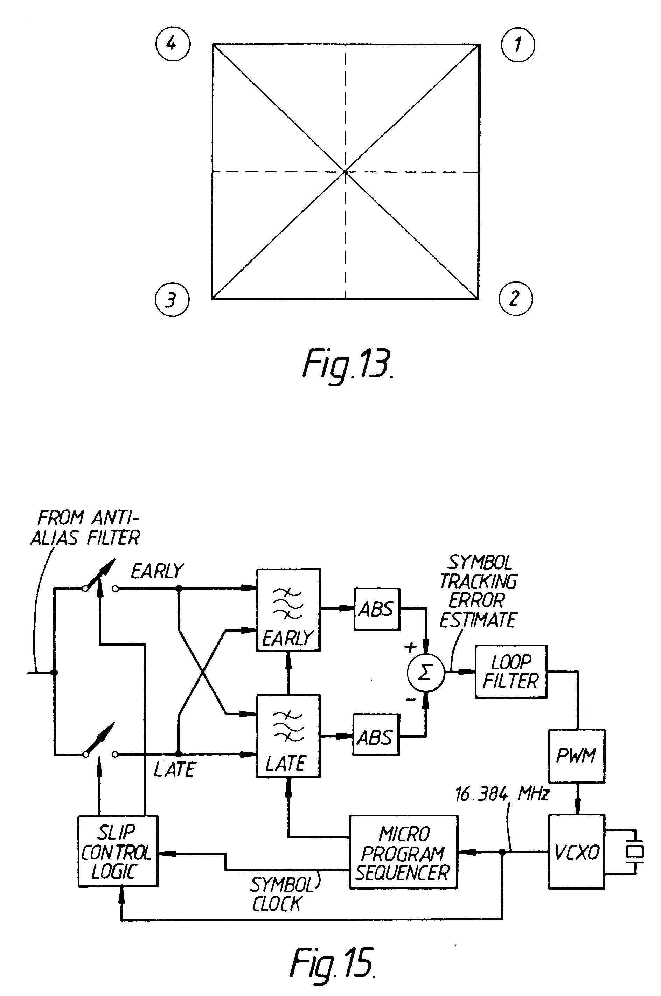

FIGURE 13 is the constellation diagram of a NICAM 728 DQPSK modulated signal;

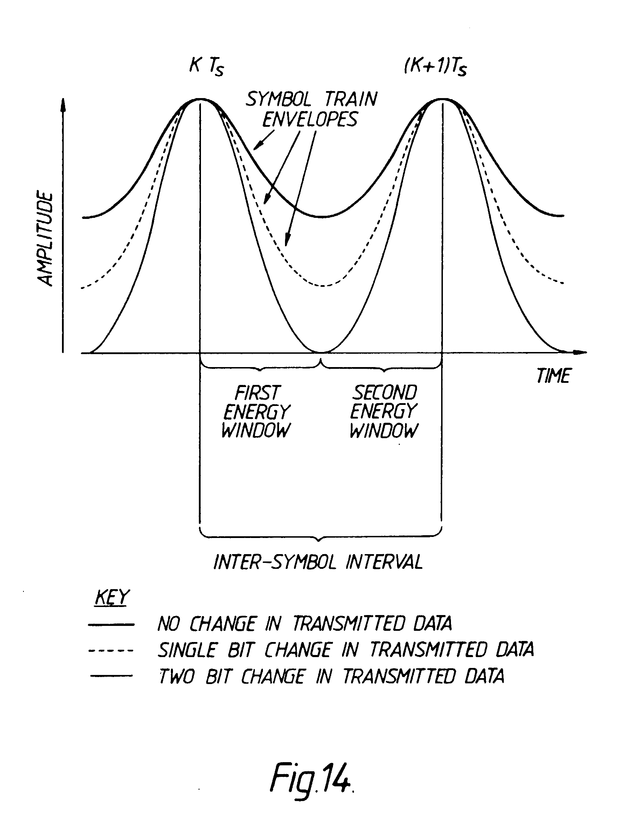

FIGURE 14 shows the energy changes from one symbol to the next;
FIGURE 15 shows the control loop for tracking the symbols;
FIGURE 16 illustrates the entire NICAM data demodulation algorithm; and
FIGURE 17 shows the architecture of a feedforward equalizer.

The invention will be described with reference to a demodulator for NICAM 728 system signals implemented in the form of a digital signal processor, possibly as a single integrated circuit chip, controlled by a special program producing algorithms for effecting the required processing of the signals. In the following description the algorithms are illustrated as circuit configurations and can be implemented in that way.

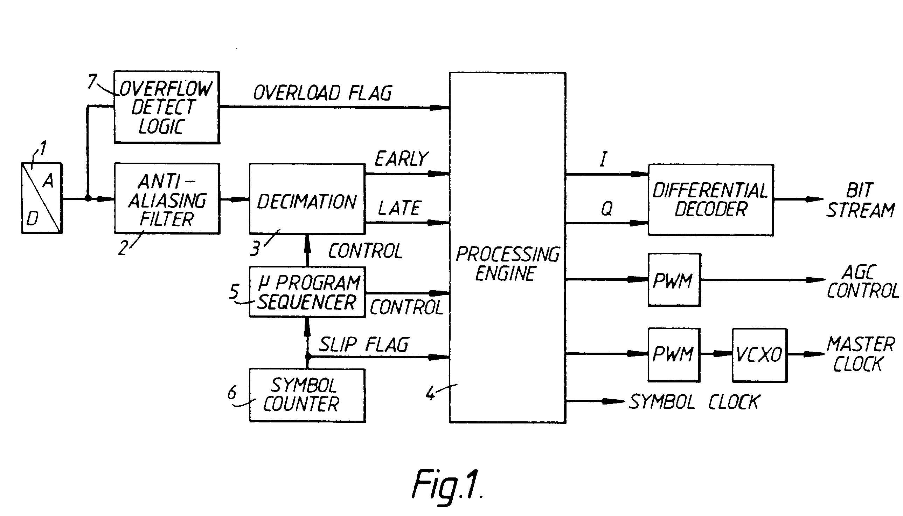

Figure 1 illustrates the main functional blocks which performs the data demodulation function. The architecture internal to each of these blocks is discussed in the following sections.

The analogue to digital converter I samples the input signal at 16.384 MHz and produces a 6-bit parallel output which is applied to the anti-alias filter 2.

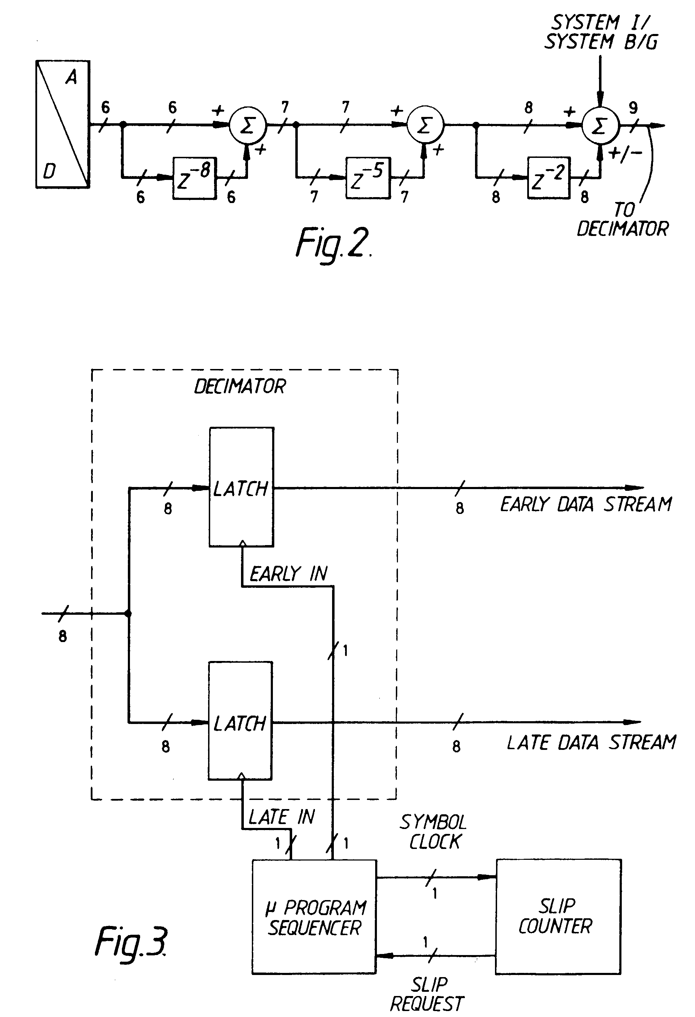

Figure 2 gives the architecture of the anti-alias filter. This filter rejects the alias bands $A_1$ and $A_2$ which are aliased into the NICAM band by the subsequent decimation process. The filter is a cascade of three comb filters. The final comb filter stage is 'programmable' in that it implements an A2 comb filter in the case of System I or implements an S2 filter in the case of System B/G. The three additions result in three bits being added to the number resolution. The top 8 bits of the 9 bit result of the final addition/substraction are propagated forward to the decimator.

The decimator 3 performs two functions :

1. Reduction in sample rate from 16.384 MHz (nominal) to 5.46133 MHz (nominal), ie. a decimate by 3.

2. Implementation of slip function to maintain symbol tracking lock.

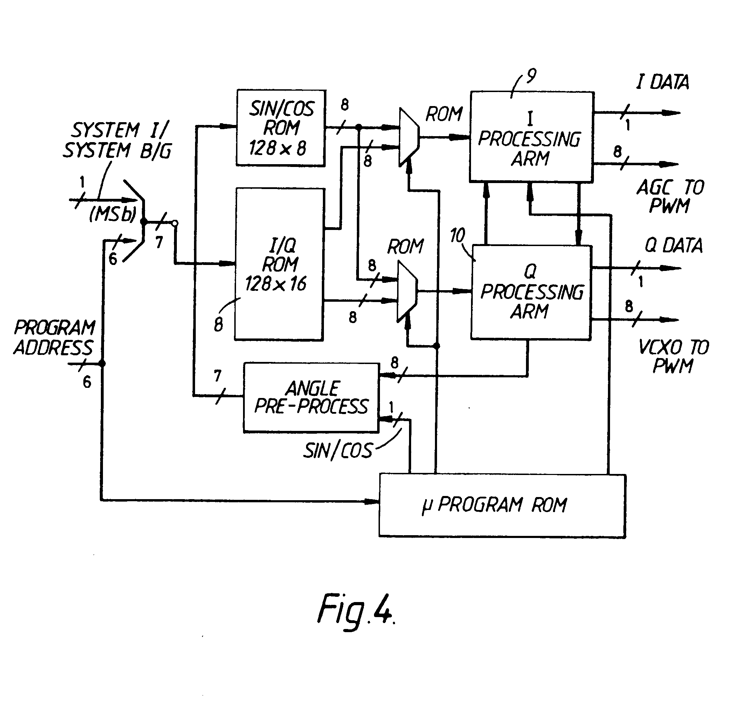

Figure 3 shows the architecture of the decimator 3.

In the operation of the decimator two clocking signals 'early in 'and 'late in' are derived from the microprogram sequencer 5, and perform the sub-sampling of the anti-alias filter output to derive the early and late sample streams which feed the matched filters.

Under the normal operating conditions (non-slip event) the 'early in' and 'late in' signals are identical, thus providing the same phase of information to the early/late filters which make up the matched filters in the processing engine 4. Every 91 symbols a sample from the comb filter output must be discarded to maintain symbol lock. This event is termed the 'slip event'. To maintain coherency across the matched filtering window of two symbols the slip event effects two symbols. In the first symbol a sample is deleted from the stream used to derive the early data stream. In the second symbol a sample is deleted from the stream used to derive the late data stream.

Notice that after the first symbol of the slip event the phase of the early/late data streams are returned to their normal operating conditions. Notice also that this is achieved by inserting an additional instruction (inst 45) into the microprogram sequence.

For compatibility with the Philips D/A convertors the final output sample stream is required to be synchronized to a 16.384 MHz master clock, this master clock being an exact multiple of the output sample rate of 32 kHz. The symbol rate (364 kHz) is, however, not an integer dividend of 16.384 MHz. Hence the use of an A/D sampling frequency of 16.384 MHz results in a non-integer number of samples per symbol $(45\frac{1}{91})$. Since the matched filters assume an integer number of samples/symbol, then the incoming symbol stream is continually advancing (by one sample every 91 symbols) with respect to the operation of the matched filters. However, by deleting one sample every 91 symbols the operation of the matched filters may be synchronized to the symbol rate. Thus all parts of the system may be synchronized.

The symbol counter 6 is a modulo 91 counter which is used to count out the inter-slip duration of 91 symbols. Clearly this counter is clocked at the symbol rate.

The overflow detection logic 7 is used as a fail safe mechanism where the AGC loop drives the front end into saturation. One detection of a full scale value on the A/D output the overflow flag is set for the duration of the subsequent symbol.

The processing engine 4 perfoms the vast majority of the data demodulating function including:

1. Matched filtering

2. AGC

3. Carrier tracking

4. Symbol tracking

The processing engine is best considered as consisting of two near identical processing arms with additional support circuitry. Figure 4 gives a block diagram description of the processing engine. The processing arms operate in parallel running separate programs to perform the demodulation. They can communicate via dedicated communication channels at specific times. Each arm is controlled separately by the microprogram ROM 8.

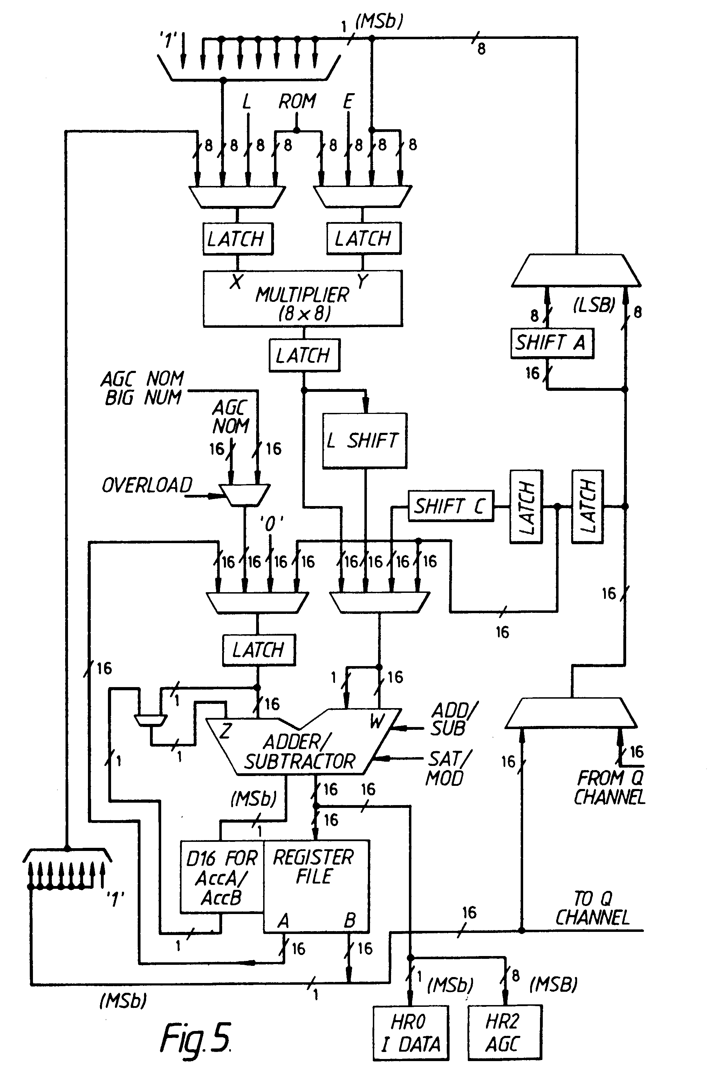

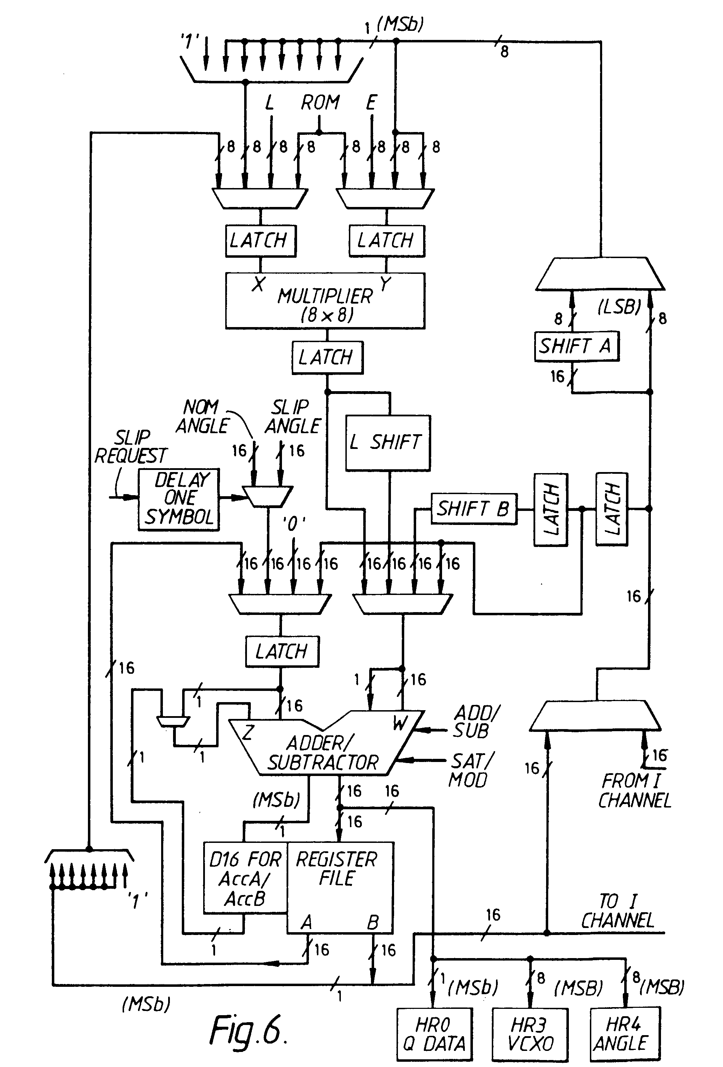

Figures 5 and 6 give a detailed description of the architecture internal to the I and Q processing arms 9 and 10 respectively. Comparison of Figures 5 and 6 will show that the two arms differ slightly in operand selection circuitry. Each arm of the architecture can execute an intruction of the form :

$$\text{Register} = (\text{holding register}) = Z[+/-/\text{plus}]\text{result\_shift}(X*Y)$$

or

$$\text{Register} = (\text{holding register}) = Z[+/-/\text{plus}]\ W$$

where

Register =     any 16 bit register in this channel's register file.
Z =     any non-shifted 17 bit (see note 1 below) register in either channel's register file or local special 16 bit constant registers.
W =     any 16 bit register in either channel's register file. Register value may be shifted by Shift B (Q channel only), Shift C (I channel only) or unshifted (see below for definition of shift B and shift C operations).
X =     8 bit 'late' input from the decimator.
    8 bit ROM value,
    The 8 bit 2's complement representation of the sign (ie. +/-1) of any value held in the local register file.
    The 8 bit 2's complement representation of the sign (ie. +/-1) of the Y parameter at the multiplier input.
Y =     8 bit 'early' input from the decimator,
    8 bit ROM value,
    The bottom eight bits of any value held in either channel's register file,

The 8 bit result of shift A on the contents of any register in either channel's register file
(see below for definition of shift A operation)

[ + / - / plus ] means EITHER '+' or '-' or 'plus'

+ =        16 bit addition (Z + W) with saturation.
- =        16 bit subtraction (Z - W) with saturation.
plus       = 16 bit addition (Z + W) without saturation (ie. modulo
              FFFF hex) - NON FILTERING INSTRUCTIONS
           17 bit addition (Z + W) without saturation (ie. modulo 1FFFF hex) - EARLY/LATE FILTERING INSTRUCTIONS

result_shift (X * Y) is either :
    No_shift (X * Y) = directly the 16-bit multiplier output.
    Lshift (X * Y) = the 16 bit-multiplier output left shifted two places (the sign bit being preserved and a '0' used as the two LSbs) saturation logic is required:

$$
\begin{aligned}
&\text{if ( (X * Y) >= 8192) )}\\
&\quad \text{L shift (X * Y) = 32767;}\\[4pt]
&\text{else}\\
&\quad \{\\
&\quad\ \text{if ( (X * Y) <= -8192) )}\\
&\quad\qquad \text{Lshift(X * Y) = -32768;}\\
&\quad \text{else}\\
&\quad\qquad \text{Lshift(X * Y) = (X * Y) << 2}\\
&\quad \}
\end{aligned}
$$

Definition of multiplier input operand (Y) shifting operations

Shift A = output = input >>8          (with sign extension)

Definition of adder/subtractor input operand (W) shifting operations

Shift B = output = input >>12          (with sign extension)

Shift C = output = input >>2          (with sign extension)

note 1:        Only two registers within the register file are 17 bits wide (namely acc_A and acc_B) the remainder are 16 bits wide. In the case of a Z operand fetch from any of the 16 bit registers the 17th bit is identical to the 16th bit (See Figure 4.10. Acc_A and Acc_B are used exclusively to perform the early/late filtering.

Non saturating 17-bit arithmetic is used for the first 14 of the 15 multiply-accumulate instructions which make up each of the early/late filtering operations. The last (15th) instruction takes a 17 bit Z operand but saturates the result to 16 bits. Roll around of the accumulated result within the first 14 instructions is not possible under any operating conditions since the A/D cannot supply sufficiently large values, even when saturating.
    Restrictions include (see architecture) :

1. The special constant registers are read only registers.

2. The holding registers are write only registers.

The instruction format illustrates that any result operand may be optionally copied into a particular holding register whilst performing the result write back to the local register file. This avoids the need for additional instructions being required to copy data from the register file to the special registers. The holding registers are HR0, HR1, HR2, HR3 and HR4. The 16 bit constant registers are angle_increment and AGC_nominal.

Each arm executes a similar purely sequential program with no branches (other than the branch back to instruction zero at the end of the program). Both programs consist of 46 instructions. These 46 instructions are best considered as 15 consecutive 3 line sub-programs followed by a single optional NOP instruction. Each sub-process is distinct. Normally the micro-instruction address cycles back to zero after instruction 44.

However, if the slip request flag is high at the end of instruction 44 the conditional NOP instruction is executed before cycling back round to instruction 0. Hence the conditional NOP is a conditional instruction 45.

The second and third instruction in each sub-program manipulate the late and early input samples respectively and perform the matched filtering of the input signal. These instructions are common to both processing 'arms', although the filter coefficients fetched are different for each arm and depend on the system modulation (ie. I or B/G). The first instruction in each sub-program is also channel dependent (ie. I or Q), and is available to perform the remainder of all the processing.

The processing arms are required to communicate in order to perform the various tracking functions. Inter-arm communication is performed via the cross coupling of the 'B' busses on the register file outputs. To avoid bus contention the other channel is prevented from using this bus during the transfer. There are two modes of operation of the processing arms, namely :

Local mode :  where each processing arm can access a register in its local register file via its 'B' bus.

Cross channel mode :  where each processing arm can access a register in the other channel's register file via the 'B' bus of the other arm.

Thus contention is avoided by restricting both arms to be operating in the same mode for a given instruction.

The processing arms communicate with the rest of the architecture via the five holding registers HR0, HR1, HR2, HR3 and HR4. The holding registers are write only registers. HR0 and HR2 appear in arm I's address space whereas HR1, HR3 and HR4 appear in arm Q's address space.

Two ROMs are used in the processing engine architecture, namely:

1) I-Rom, Q-ROM : 128 words x 16 bits
Note : the upper eight bits holds I values and the lower eight bits hold Q values.

2) COS-ROM : 128 words x 8 bits

The two ROM's may be combined in a single ROM.

The I_ROM ROM is used exclusively by the I processing arm. Similarly the Q_ROM ROM is used exclusively by the Q processing arm. The COS_ROM provide the sin/cos lookup table function and is accessed by both processing arms. The COS_ROM is accessed twice per symbol, once to fetch a cosine value and once to fetch a sine value. The value fetched in both cases is fed to both processing arms. A part form these two COS_ROM accesses each processing arm uses only its associated ROM to fetch constants.

The bottom 6 bits of ROM addressing for the I_ROM and Q_ROM is provided by the current microprogram address, thus reducing the micro instruction decode ROM width. The MSb of the ROM address is provided by the System I/System BG flag.

Since the micro program address generator may not generate a valid address bigger than 45 then the ROM locations 46 to 63 inclusive and 110 to 127 inclusive in ROM I_ROM Q_ROM are never accessed.

The ROM addressing for the COS_ROM is provided by the contents of holding register HR4 which contains the result of the carrier tracking algorithm (angle). The 8 bit contents of this register is pre-processed to yield a 7 bit result which is then used to address the COS_ROM. The sin/cos look up may be defined as :

case 1:  COSINE TABLE ACCESS
COS(angle) = COS_ROM (address)
where address is given by

case a:  Msb of angle is zero
address = seven LS bits of angle

case b:     Msb of angle is one
            address = seven LS bits of angle INVERTED

case 2:     SINE TABLE ACCESS
            SIN(angle) = COS(angle + 64):

**Note**: The I_ROM and Q_ROM could equivalently be implemented either by a single 128 by 16 bit wide ROM or two 128 x 8 bit ROMs.

It should be noted that the content of the COS_ROM at address 'N' is defined by

$$[127 = COS(N\pi/128 + \pi/256)]$$

where [ ] denotes rounding to the nearest integer.

The circular buffer consists of two registers in each arm, referred to as circular_buffer{n-1} and circular_buffer{n-2}. When these registers are accessed the lsb of the register address is provided not directly by the microcode, but is XOR'd with a flip-flop output which toggles on each symbol. Hence the actual register accessed as circular-buffer{n-1} toggles from symbol to symbol between the two registers RF2/RF3. Similarly the actual register accessed as circular_buffer{n-2} also toggles between RF3, RF2 respectively.

The optimum filter for demodulation of the NICAM signal is the matched filter. The matched filter is defined by equation 1.15.

$$H(f) = \frac{KD(f)}{G_I(f)} \qquad (1.15)$$

where

$H(f) =$     Matched filter response

$D(f) =$     Wanted signal spectrum

$G_I(f) =$     Interference signal power spectral density function

$K$ is an arbitrary constant which may be ignored.

The digital equivalent of equation 1.15 is given by equation 1.16.

$$H(z) = \frac{D(z)}{G_I(z)} \qquad (1.16)$$

Transforming back to the time domain and utilising the Wiener-Khintchine theorem, equation 1.15 becomes

$$\Phi_{II}(t) * H(t) = D(t) \qquad (1.17)$$

where
    * denotes convolution.

$$\Phi_{II}(t) = \text{autocorrelation function of the interference signal.} \qquad (1.18)$$

In the case where the interference signal may be assumed to be uncorrelated from sample to sample (i.e. it has a "white" spectrum) then

$$\Phi_{II}(t) = \delta(t) \qquad (1.19)$$

7

and equation 1.17 reduces to the well known result

$$H(t) = D(t) \qquad (1.20)$$

i.e. that the matched filter has the same response as the wanted signal.

In the case of the NICAM signal, the interfering signals are not uncorrelated, being derived from a composite TV signal. Consequently, the optimum matched filter needs to be designed by consideration of a realistic interfering FM sound and video signal.

In the case of system I, each of the arm filters in I and Q arms are implemented as a cascade of the comb filters with an FIR filter of duration 2 symbols running at one third of the input sample rate. The coefficients of the FIR filters for system I are derived using a procedure which optimizes the overall response of the cascade of the comb filters with the FIR filter. The coefficients used are:

| HI(0) = | 5/256 | HQ(0) = | 2/256 |
|---|---|---|---|
| HI(1) = | -2/256 | HQ(1) = | 5/256 |
| HI(2) = | -6/256 | HQ(2) = | 2/256 |
| HI(3) = | 0/256 | HQ(3) = | -3/256 |
| HI(4) = | 1/256 | HQ(4) = | 1/256 |
| HI(5) = | -9/256 | HQ(5) = | 0/256 |
| HI(6) = | -2/256 | HQ(6) = | -18/256 |
| HI(7) = | 32/256 | HQ(7) = | -11/256 |
| HI(8) = | 28/256 | HQ(6) = | 40/256 |
| HI(9) = | -46/256 | HQ(9) = | 52/256 |
| HI(10) = | -80/256 | HQ(10) = | -38/256 |
| HI(11) = | 20/256 | HQ(11) = | -106/256 |
| HI(12) = | 123/256 | HQ(12 = | -12/256 |
| HI(13) = | 49/256 | HQ(13) = | 127/256 |
| HI(14) = | -113/256 | HQ(14) = | 86/256 |
| HI(15) = | -113/256 | HQ(15) = | -87/256 |
| HI(16) = | 49/256 | HQ(16) = | -127/256 |
| HI(17) = | 123/256 | HQ(17) = | 12/256 |
| HI(18) = | 20/256 | HQ(18) = | 106/256 |
| HI(19) = | -80/256 | HQ(19) = | 38/256 |
| HI(20) = | -46/256 | HQ(20) = | -52/256 |
| HI(21) = | 28/256 | HQ(21) = | -40/256 |
| HI(22) = | 32/256 | HQ(22) = | 11/256 |
| HI(23) = | -3/256 | HQ(23) = | 18/256 |
| HI(24) = | -9/256 | HQ(24) = | 0/256 |
| HI(25) = | 1/256 | HQ(25) = | -1/256 |
| HI(26) = | 0/256 | HQ(26) = | 3/256 |
| HI(27) = | -6/256 | HQ(27) = | -1/256 |
| HI(28) = | -2/256 | HQ(28) = | -4/256 |
| HI(29) = | 5/256 | HQ(29) = | -2/256 |

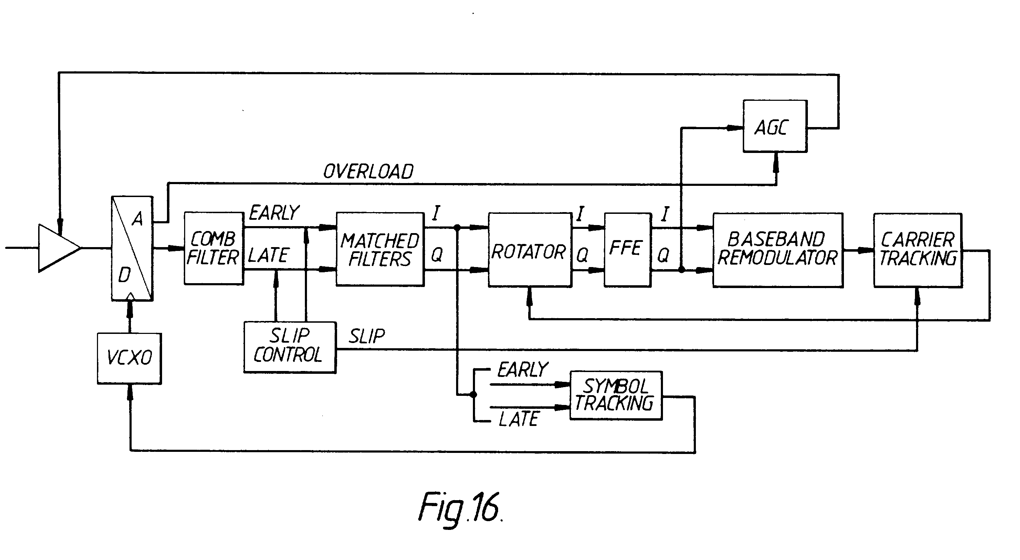

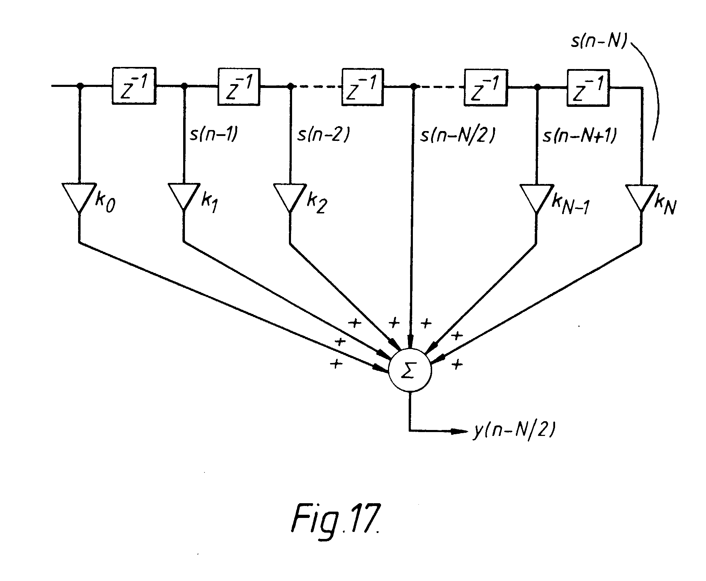

In the case of systems B and G, the performance of the matched filter is inadequate if the length of the matched filter is limited to 2 symbols duration. In order to overcome that difficulty a feedforward equalizer is used to extend the effective time window of the matched filter as shown in Figure 16, allowing both ISI to be reduced, and allowing greater frequency resolution. Figure 17 illustrates how the feedforward equalizer works. The FFE is essentially an FIR filter whose inputs are the outputs from the matched filter, sampled at the centre of each symbol. The FFE thus operates at the symbol rate and for an 'N' tap filter has a time window of N symbols. The central symbol value S(n-N/2) is the symbol currently being processed. This symbol value has a weighted sum of contributions from its adjacent removed. The intention is that the filter coefficients are indicative of the ISI contributions from adjacent symbols. For symmetrical symbol waveforms such as NICAM the ISI contributions from symbols symmetrically placed either side of the central symbol will be identical. Hence:

$$K_L = K_{L-N-1} \qquad 0 \le L \le (N/2 - 1)$$

In the case of systems B and G, each of the arm filters in the I and Q arms are implemented as a cascade of the comb filters, an FIR filter of duration 2 symbols running at one third of the input sample rate and a feedforward equalizer of length 3 symbols. The coefficients of the FIR filter and the feedforward equalizer are derived using a procedure which optimizes the overall response of the cascade of the comb filters, the FIR filters and the feedforward equalizer. The coefficients used are:-

| FFEI(0) = | -52/256 | FFEQ(O) = | -52/256 |
|-----------|---------|-----------|---------|
| FFEI(1) = | 1 | FFEQ(1) = | 1 |
| FFEI(2) = | -52/256 | FFEQ(2) = | -52/256 |
| | | | |
| HI(0) = | 22/256 | HQ(0) = | 3/256 |
| HI(1) = | 18/256 | HQ(1) = | 9/256 |
| HI(2) = | 8/256 | HQ(2) = | 18/256 |
| HI(3) = | -3/256 | HQ(3) = | 29/256 |
| HI(4) = | -16/256 | HQ(4) = | 37/256 |
| HI(5) = | -30/256 | HQ(5) = | 38/256 |
| HI(6) = | -44/256 | HQ(6) = | 27/256 |
| HI(7) = | -56/256 | HQ(7) = | 5/256 |
| HI(8) = | -62/256 | HQ(8) = | -25/256 |
| HI(9) = | -57/256 | HQ(9) = | -55/256 |
| HI(10) = | -36/256 | HQ(10) = | -77/256 |
| HI(11) = | -2/256 | HQ(11) = | -86/256 |
| HI(12) = | 39/256 | HQ(12) = | -79/256 |
| HI(13) = | 75/256 | HQ(13) = | -55/256 |
| HI(14) = | 97/256 | HQ(14) = | -20/256 |
| HI(15) = | 97/256 | HQ(15) = | 20/256 |
| HI(16) = | 75/256 | HQ(16) = | 55/256 |
| HI(17) = | 39/256 | HQ(16) = | 79/256 |
| HI(18) = | -3/256 | HQ(18) = | 86/256 |
| HI(19) = | -36/256 | HQ(19) = | 77/256 |
| HI(20) = | -56/256 | HQ(20) = | 54/256 |
| HI(21) = | -62/256 | HQ(21) = | 24/256 |
| HI(22) = | -56/256 | HQ(22) = | -5/256 |
| HI(23) = | -44/256 | HQ(23) = | -27/256 |
| HI(24) = | -30/256 | HQ(24) = | -38/256 |
| HI(25) = | -16/256 | HQ(25) = | -37/256 |
| HI(26) = | -3/256 | HQ(26) = | -29/256 |
| HI(27) = | 9/256 | HQ(27) = | -18/256 |
| HI(28) = | 18/256 | HQ(28) = | -9/256 |
| HI(29) = | 22/256 | HQ(29) = | -3/256 |

The matched filters only operate successfully when the phase of the carrier for each symbol is the same as the reference phase used in the matched filters. The received carrier may, however, have any arbitrary phase, which will vary with time due to transmitted carrier frequency drift and the local sampling rate variations. The carrier lock loop is required to calculate the phase difference angle, and rotate the output of the matched filters accordingly.

Consider the operation of the matched filter which is matched to the inphase component of the NICAM signal. The NICAM signal may be represented by

$$z(t) = I_K D(t)\cos(\omega ct - \phi) - Q_K D(t)\sin(\omega ct + \phi) \qquad (1.36)$$

The impulse response of this matched filter $P_I(t)$ is thus given by

$$P_I(t) = AD(t)\cos \omega ct \qquad (1.37)$$

where $A$ is an arbitrary gain constant.

If the matched filter is considered as an ideal correlation receiver then $VOI(KT_S)$, the in-phase component output by a matched filter, is given by:-

$$VOI(KT_S) = \int_{-\infty}^{\infty} P_I(t)z(t)dt \qquad (1.38)$$

Since

$$\cos(\omega ct + \phi) = \cos \omega ct \cos \phi - \sin \omega ct \sin \phi \qquad (1.39)$$

$$\sin(\omega ct + \phi) = \sin \omega ct \cos \phi + \cos \omega ct \sin \phi \qquad (1.40)$$

then

$$VOI(KT_S) = A\cos\phi \int_{-\infty}^{\infty} I_K D^2(t) \cos^2 \omega ct\, dt$$

$$- A\sin\phi \int_{-\infty}^{\infty} Q_K D^2(t) \cos^2 \omega ct\, dt$$

$$- A\cos\phi \int_{-\infty}^{\infty} I_K D^2(t) \sin \omega ct \cos \omega ct\, dt$$

$$- A\sin\phi \int_{-\infty}^{\infty} Q_K D^2(t) \sin \omega ct \cos \omega ct\, dt \qquad (1.41)$$

The third and fourth integrals are integrals of an odd function over symmetric limits and thus integrate to zero. Hence

$$VOI(KT_S) = I_K A\cos\phi \int_{-\infty}^{\infty} [D(t)\cos \omega ct]^2\, dt$$

$$- Q_K A\sin\phi \int_{-\infty}^{\infty} [D(t)\cos \omega ct]^2\, dt \qquad (1.42)$$

now $D(t) \cos \omega ct$ corresponds to the baseband pulse shape modulated onto a cosine carrier. The power spectral density function $G_z(f)$ is given by

$$\int_{-\infty}^{\infty} G_z(f)df = \int_{-\infty}^{\infty} (D(t) \cos wct)^2 \, dt \qquad (1.43)$$

Hence

$$VOI(KT_s) = I_K A \cos \dot\phi \int_{-\infty}^{\infty} G_z(f)df \div Q_K A \sin \phi \int_{-\infty}^{\infty} G_z(f)df \qquad (1.44)$$

If E is the energy within the symbol due to the inphase component then

$$\int_{-\infty}^{\infty} G_z(f)df = E \qquad (1.45)$$

Hence

$$VOI(KT_S) = [I_K \cos \phi + Q_K \sin \phi] \cdot AE \qquad (1.46)$$

Similarly for the quadrature component

$$VOQ(KT_S) = [-I_K \sin \phi + Q_K \cos \phi] \cdot AE \qquad (1.47)$$

The above results may be obtained directly by resolving the inphase and quadrature components onto the reference vectors with the gain A equal to unity.

$$I_{o/p} = IREF. \, (I_K + Q_K) \qquad (1.48)$$

$$= E[I_K \cos \phi + Q_K \sin \phi] \qquad (1.49)$$

$$Q_{o/p} = QREF. \, (I_K + Q_K) \qquad (1.50)$$

$$= E[-I_K \sin \phi + Q_K \cos \phi] \qquad (1.51)$$

Hence we may correct for phase error by rotating the output of the filters thus

$$I_K E = \cos \phi . \, VOI(KT_S) - \sin \phi \, VOQ(KT_S) \qquad (1.52)$$

$$Q_K E = \sin \phi . \, VOI(KT_S) + \cos \phi \, VOQ(KT_S) \qquad (1.53)$$

ie the correct I and Q outputs I' and Q' are given by

$$\left[ \begin{array}{c} I' \\ Q' \end{array} \right] = \left[ \begin{array}{cc} \cos\phi & -\sin\phi \\ \sin\phi & \cos\phi \end{array} \right] \left[ \begin{array}{c} I \\ Q \end{array} \right] \qquad (1.54)$$

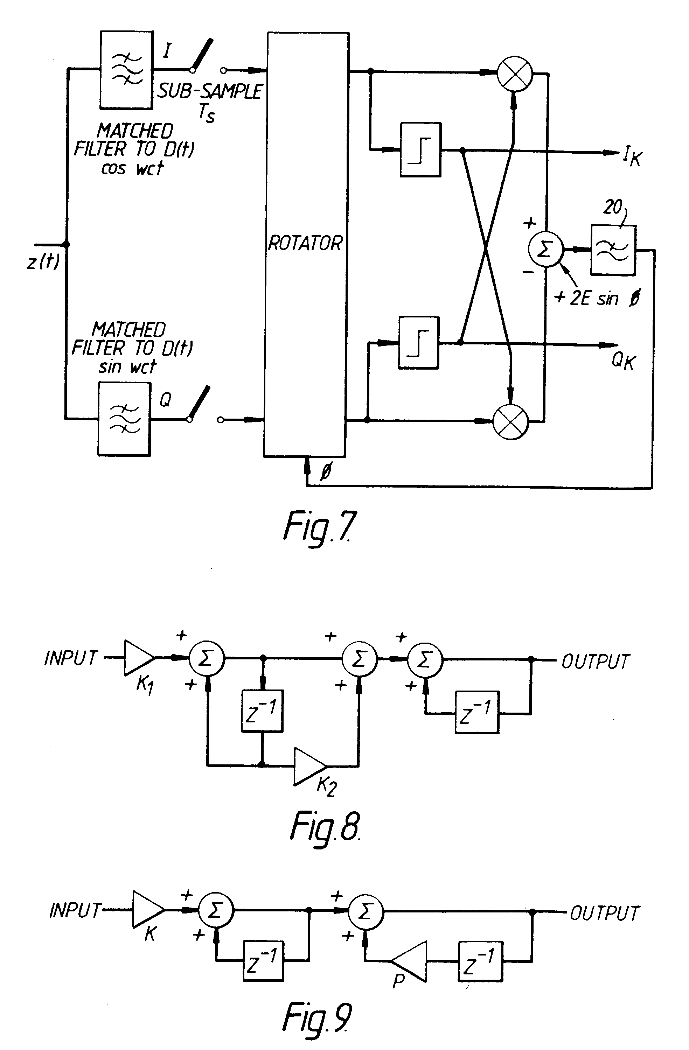

The angle $\phi$ may be calculated from $VOI(KT_S)$ and $VOQ(KT_S)$ by base-band remodulation. That is implemented by the right-band side of Figure 7.

Assuming that the limiters produce the original baseband signal $I_K$ and $Q_K$ then $y$ is given by

$$y = E[Q_K I_K \cos\phi +$$

$$Q_K^2 \sin\phi] -$$

$$E[I_K Q_K \cos\phi -$$

$$I_K^2 \sin\phi] \qquad (1.55)$$

$$= +2E\sin\phi \text{ (since } I_K^2 = Q_K^2 = E) \qquad (1.56)$$

Given $\sin\phi$ may use a look up table for $\cos\phi$ and hence generate the rotation matrix, or alternatively, since the loop will be nominally operating in lock, $\phi$ may be assumed to be small so that $\phi \approx \sin\phi$.

Returning to the assumption that $I_K$ and $Q_K$ are obtained at the output of the limiters, this assumption is valid if

$$\cos\phi = \sin\phi > 0 \qquad (1.57)$$

ie if

$$\phi < \frac{\pi}{4} \qquad (1.58)$$

Since the reference carrier arbitrarily be any one of four vectors spaced $\frac{\pi}{2}$ apart, then the incoming NICAM carrier cannot be more than $\frac{\pi}{4}$ from a possible reference carrier position. Therefore the assumption is valid in the absence of interference.

Figure 7 illustrates the carrier tracking loop. The loop filter 20 provides a feedback path between the baseband remodulator and the rotator.

The required ideal characteristics of the carrier loop filter are:

1. Zero steady state error ($E(z)$) as a result of a step change in $\phi(z)$. A step change in $\phi(z)$ arises if the incoming NICAM carrier has a fixed non-zero phase offset with respect of the local carrier phase.

2. Zero steady state error ($E(z)$) as a result of a ramp change in $\phi(z)$. A ramp change in $\phi(z)$ is obtained if the incoming NICAM carrier has a fixed frequency offset relative to the local carrier frequency. This situation will occur due to transmitter inter-carrier drift and variations in sampling clock frequency.

3. Zero phase jitter on the estimate of carrier phase $\phi(z)$. The output of the baseband remodulator will be corrupted by ISI, noise and residual TV signal interference. Ideally the carrier loop filter should remove this jitter component by providing sufficient attenuation of the frequency components which make up this jitter signal.

Figure 8 shows the architecture of a suitable loop filter.

As discussed previously, the output of the baseband remodulator is corrupted by residual interference. This gives rise to 'Jitter' on the carrier tracking error estimate. This Jitter is filtered by the loop filter and leads to corruption of the rotation angle used by the rotator, thereby degrading system performance. In order to reduce the residual jitter at the output of the loop filter the loop filter gain and bandwith are required to be reduced. This causes the response time of the closed loop transfer function to be correspondingly increased. Hence there is a trade-off between settling time and jitter performance.

The baseband remodulator performs the estimation of carrier tracking error on a symbol to symbol basis. This estimate is only valid if the carrier tracking error remains constant for the duration of each symbol. Hence, in the case of a frequency offset between the received carrier and local carrier reference, the carrier tracking error estimate provided by the baseband remodulator is in error. This error is related to the frequency offset (fdiff) between the local and received carriers and the symbol rate, ie.

$$\text{error } \alpha \frac{2\pi \text{fdiff}}{\text{symbol rate}}$$

In the case of fdiff = 1 kHz for System I, the error was found to be approximately 0.006 radians. Hence the constant of proportionality is $\approx 0.35$.

The carrier loop filter shown in Figure 8 is a design based on the zero steady state error requirements. It can be shown that even with this 'ideal' filter structure the steady state error will in fact be non-zero. This result leads to the conclusion that a simplified filter structure (which does not necessarily meet the zero steady state error requirements) could be used with negligible loss in performance, provided that the theoretical steady state error is small compared to expected degradation due to the baseband remodulator corruption of carrier tracking error (or small compared to the residual jitter). The architecture of a simpler loop filter designed on that basis is shown in Figure 9.

The simplified loop filter is a cascade of a single integrator and a lowpass filter (See Figure 9 and requires one less accumulator than the 'ideal' filter given previously. The presence of the single integrator guarantees zero steady state error in response to step change in phase difference. The steady state error in response to a ramp change in phase difference is

$$\left(\frac{P-1}{KG}\right) \cdot \frac{2\pi \text{fdiff}}{\text{fsym}}$$

Hence for equivalent performance with the loop filter shown in Figure 8 then

$$\left|\frac{P-1}{KG}\right| << 0.35$$

If the DC gain of the lowpass section is normalised, ie.

$$K = K_v(1 - P)$$

then the requirement becomes

$$\frac{1}{K_v G} << 0.35$$

$$\Rightarrow K_v >> 2.85 \text{ for } G \approx 1$$

## Claims

1. Signal processing apparatus comprising;

   sampling means (1) for sampling an input signal to produce a sequence of samples, said sampling means (1) converting said sequence of samples to a digital signal;
   first filtering means (2) for filtering said digital signal, said first filtering means producing a filtered signal indicative thereof;

selecting means (3) for selecting at least one sample from said sequence of samples and for producing a selected signal representative of said remaining samples;

second filtering means (in 4) for filtering said selected signal representing said remaining samples and for producing a filtered digital signal indicative thereof; and

digital signal processing means (4) responsive to said filtered digital signal received from said second filtering means (in 4), said digital processing means (4) being arranged for producing an output signal having a predefined band of frequencies within a predetermined spectrum shaping.

2. Apparatus according to Claim 1, wherein the characteristic of the first digital filtering means has a peak in the desired frequency bank and one or more troughts in respective frequency banks which overlie the desired frequency band as a result of the operation of the selecting means.

3. Apparatus according to Claim 2, wherein the first digital filtering means comprises a plurality of comb filters in cascade.

4. Apparatus according to Claim 2 or Claim 3, wherein the selecting means is arranged for selecting the filtered signal representing one sample from each group of the filtered signals representing three samples.

5. Apparatus according to any one of the preceding claims, wherein the input signal includes representations of symbols produced at a second repetition rate and derived from samples taken from an input signal at a first repetition rate, the sampling rate of the sampling means being a multiple of the first repetition rate, and the operation of the selecting means being periodically modified so that the mean repetition rate of the selected filtered digital signal is a multiple of the second repetition rate.

6. Apparatus according to any one of the preceding claims, wherein the digital signal processing means comprises means for periodically processing samples from the signals received from the second digital filtering means, and means for producing a pulse-width modulated output signal from the processed samples, the pulse-width modulated output signal being usable after smoothing as an automatic gain control signal for limiting the dynamic range of the signal applied to the apparatus.

7. Apparatus according to Claim 6, wherein the sampling means is arranged to produce an overload signal when the input signal reaches a maximum value that can be digitised, the overload signal being usable to modify the automatic gain control signal.

8. Apparatus according to any one of the preceding claims, wherein the input signal is a quadrature phase modulated signal and the digital signal processing means operates as a demodulator and includes two matched filters for the quadrature components of the signal and rotator means responsive to the outputs of the matched filters for adjusting the values of the signal components so that the signal is in a reference phase.

9. Apparatus according to Claim 8, wherein the signal processing means includes means for subdividing the signals received from the second digital filtering means into groups representing symbols and for adjusting the position of the subdivision in response to the energy content of the groups so as to correct the subdivision of the signals into groups representing symbols.

10. Apparatus according to Claim 9, wherein the sampling means includes oscillator means for determining the instants of sampling the input signal, the oscillator means also operating the selecting means, wherein the frequency of oscillator means is adjustable in response to the energy content of the groups of signals representing symbols.

11. Apparatus according to any one of the preceding claims, wherein first filtering means, the selecting means, the second filtering means, the digital signal processing means and the interconnections between are provided by a suitably programmed microprocessor.

12. Apparatus according to any of Claims 8 to 10, wherein all the first filtering means, the selecting means, the second filtering means, the digital signal processing means are provided by suitable programmed microprocessor means having two separate processing units for respectively processing the two quadrature components with similar and co-operating programs, each of the processing units having access to storage registers of the other of the processing units.

**13.** Apparatus according to any of Claims 8 to 12, wherein the input signal is a differential quadrature phase shift keying modulated signal.

**14.** Apparatus according to Claim 12, wherein the input signal includes a NICAM 728 signal.

**15.** Apparatus according to Claim 14 for demodulating an I system signal in which the coefficients of the I and Q channel matched filters are:

| HI(0) = | 5/256 | HQ(0) = | 2/256 |
|---|---|---|---|
| HI(1) = | -2/256 | HQ(1) = | 5/256 |
| HI(2) = | -6/256 | HQ(2) = | 2/256 |
| HI(3) = | 0/256 | HQ(3) = | -3/256 |
| HI(4) = | 1/256 | HQ(4) = | 1/256 |
| HI(5) = | -9/256 | HQ(5) = | 0/256 |
| HI(6) = | -2/256 | HQ(6) = | -18/256 |
| HI(7) = | 32/256 | HQ(7) = | -11/256 |
| HI(8) = | 28/256 | HQ(8) = | 40/256 |
| HI(9) = | -46/256 | HQ(9) = | 52/256 |
| HI(10) = | -80/256 | HQ(10) = | -38/256 |
| HI(11) = | 20/256 | HQ(11) = | -106/256 |
| HI(12) = | 123/256 | HQ(12) = | -12/256 |
| HI(13) = | 49/256 | HQ(13) = | 127/256 |
| HI(14) = | -113/256 | HQ(14) = | 86/256 |
| HI(15) = | -113/256 | HQ(15) = | -87/256 |
| HI(16) = | 49/256 | HQ(16) = | -127/256 |
| HI(17) = | 123/256 | HQ(17) = | 12/256 |
| HI(18) = | 20/256 | HQ(18) = | 106/256 |
| HI(19) = | -80/256 | HQ(19) = | 38/256 |
| HI(20) = | -46/256 | HQ(20) = | -52/256 |
| HI(21) = | 28/256 | HQ(21) = | -40/256 |
| HI(22) = | 32/256 | HQ(22) = | 11/256 |
| HI(23) = | -3/256 | HQ(23) = | 18/256 |
| HI(24) = | -9/256 | HQ(24) = | 0/256 |
| HI(25) = | 1/256 | HQ(25) = | -1/256 |
| HI(26) = | 0/256 | HQ(26) = | 3/256 |
| HI(27) = | -6/256 | HQ(27) = | -1/256 |
| HI(28) = | -2/256 | HQ(28) = | -4/256 |
| HI(29) = | 5/256 | HQ(29) = | -2/256 |

**16.** Apparatus according to Claim 14 for demodulating a B or G system signal in which the coefficients of the I and Q channel matched filters are:

| HI(0) = | 22/256 | HQ(0) = | 3/256 |
|---|---|---|---|
| HI(1) = | 18/256 | HQ(1) = | 9/256 |
| HI(2) = | 8/256 | HQ(2) = | 18/256 |
| HI(3) = | -3/256 | HQ(3) = | 29/256 |
| HI(4) = | -16/256 | HQ(4) = | 37/256 |
| HI(5) = | -30/256 | HQ(5) = | 38/256 |
| HI(6) = | -44/256 | HQ(6) = | 27/256 |
| HI(7) = | -56/256 | HQ(7) = | 5/256 |
| HI(8) = | -62/256 | HQ(8) = | -25/256 |
| HI(9) = | -57/256 | HQ(9) = | -55/256 |
| HI(10) = | -36/256 | HQ(10) = | -77/256 |

(continued)

| | | | |
|---|---|---|---|
| HI(11) = | -2/256 | HQ(11) = | -86/256 |
| HI(12) = | 39/256 | HQ(12) = | -79/256 |
| HI(13) = | 75/256 | HQ(13) = | -55/256 |
| HI(14) = | 97/256 | HQ(14) = | -20/256 |
| HI(15) = | 97/256 | HQ(15) = | 20/256 |
| HI(16) = | 75/256 | HQ(16) = | 55/256 |
| HI(17) = | 39/256 | HQ(17) = | 79/256 |
| HI(18) = | -3/256 | HQ(18) = | 86/256 |
| HI(19) = | -36/256 | HQ(19) = | 77/256 |
| HI(20) = | -56/256 | HQ(20) = | 54/256 |
| HI(21) = | -62/256 | HQ(21) = | 24/256 |
| HI(22) = | -56/256 | HQ(22) = | -5/256 |
| HI(23) = | -44/256 | HQ(23) = | -27/256 |
| HI(24) = | -30/256 | HQ(24) = | -38/256 |
| HI(25) = | -16/256 | HQ(25) = | -37/256 |
| HI(26) = | -3/256 | HQ(26) = | -29/256 |
| HI(27) = | 9/256 | HQ(27) = | -18/256 |
| HI(28) = | 18/256 | HQ(28) = | -9/256 |
| HI(29) = | 22/256 | HQ(29) = | -3/256 |

and the outputs of the matched filters are applied to feedforward equalizers respectively for the I and Q channels having the coefficients:

| | | | |
|---|---|---|---|
| FFEI(0) = | -52/256 | FFEEQ(0) = | -52/256 |
| FFEI(1) = | 1 | FFEQ(1) = | 1 |
| FFEI(2) = | -52/256 | FFEQ(2) = | -52/256 |

17. A method of processing an input signal comprising; sampling an input signal to produce a sequence of samples and converting said sequence of samples to a digital signal;

first filtering said digital signal and to produce a filtered signal indicative thereof;
selecting at least one sample from said sequence of samples and producing a selected signal representing said remaining samples;
second filtering said selected signal representing said remaining samples and producing a filtered digital signal indicative thereof; and
providing digital signal processing means (4) responsive to said filtered digital signal to produce an output signal having a predefined band of frequencies within a predetermined spectrum shaping.

18. A method according to Claim 17, wherein the characteristic of the first filtering step has a peak in the desired frequency bank and one or more troughs in respective frequency bands which overlie the desired frequency band as a result of the selection operation.

19. A method according to Claim 18, wherein the first filtering step has the characteristic of a plurality of comb filters in cascade.

20. A method according to Claim 18 or Claim 19, wherein the selecting step is such that the digital signals representing one sample are selected from each group of digital signals representing three samples.

21. A method according to any one of Claims 17 to 19, wherein the input signal includes representations of symbols produced at a second repetition rate and derived from samples taken from an original signal at a first repetition rate, the sampling rate applied to the input signal being a multiple of the first repetition rate and the selection being periodically modified so that the mean repetition rate of the selected digital output signals is a multiple of the second repetition rate.

**22.** A method according to any one of Claims 17 to 21, wherein the digital signal processing means operates to process periodically samples from the signals it receives and produces a pulse-width modulated output signal from the processed samples, the pulse-width modulated output signal being usable after smoothing as an automatic gain control signal for limiting the dynamic range of the input signal.

**23.** A method according to Claim 22, further comprising producing an overload signal when the input signal reaches a maximum value that can be digitised, the overload signal being usable to modify the automatic gain control signal.

**24.** A method according to any one of Claims 17 to 23, wherein the input signal is a quadrature phase modulator signal and the digital signal processing means operates as a demodulator applying matched filters to the quadrature components of the signal and being responsive to the values of those components to adjust them so that the signal is in a reference phase.

**25.** A method according to Claim 24, wherein the signal processing means subdivides the signals it receives into groups representing symbols, adjusting the position of the subdivision in response to the energy content of the groups.

**26.** A method according to Claim 25, wherein the frequency of an oscillation is adjusted in response to the energy content of the groups, the oscillator determining the instants of sampling the input signal and position of the subdivision into groups.

**27.** A method according to any of Claims 25 to 27, wherein the input signal is a differential quadrature phase shift keying modulated signal.

**28.** A method according to Claim 27, wherein the input signal includes a NICAM 728 signal.

**29.** A method according to Claim 28 for demodulating an I system signal in which the coefficients of the I and Q channel matched filters are:

| $HI(0) =$ | 5/256 | $HQ(0) =$ | 2/256 |
|---|---|---|---|
| $HI(1) =$ | -2/256 | $HQ(1) =$ | 5/256 |
| $HI(2) =$ | -6/256 | $HQ(2) =$ | 2/256 |
| $HI(3) =$ | 0/256 | $HQ(3) =$ | -3/256 |
| $HI(4) =$ | 1/256 | $HQ(4) =$ | 1/256 |
| $HI(5) =$ | -9/256 | $HQ(5) =$ | 0/256 |
| $HI(6) =$ | -2/256 | $HQ(6) =$ | -18/256 |
| $HI(7) =$ | 32/256 | $HQ(7) =$ | -11/256 |
| $HI(8) =$ | 28/256 | $HQ(8) =$ | 40/256 |
| $HI(9) =$ | -46/256 | $HQ(9) =$ | 52/256 |
| $HI(10) =$ | -80/256 | $HQ(10) =$ | -38/256 |
| $HI(11) =$ | 20/256 | $HQ(11) =$ | -106/256 |
| $HI(12) =$ | 123/256 | $HQ(12) =$ | -12/256 |
| $HI(13) =$ | 49/256 | $HQ(13) =$ | 127/256 |
| $HI(14) =$ | -113/256 | $HQ(14) =$ | 86/256 |
| $HI(15) =$ | -113/256 | $HQ(15) =$ | -87/256 |
| $HI(16) =$ | 49/256 | $HQ(16) =$ | -127/256 |
| $HI(17) =$ | 123/256 | $HQ(17) =$ | 12/256 |
| $HI(18) =$ | 20/256 | $HQ(18) =$ | 106/256 |
| $HI(19) =$ | -80/256 | $HQ(19) =$ | 38/256 |
| $HI(20) =$ | -46/256 | $HQ(20) =$ | -52/256 |
| $HI(21) =$ | 28/256 | $HQ(21) =$ | -40/256 |
| $HI(22) =$ | 32/256 | $HQ(22) =$ | 11/256 |
| $HI(23) =$ | -3/256 | $HQ(23) =$ | 18/256 |
| $HI(24) =$ | -9/256 | $HQ(24) =$ | 0/256 |
| $HI(25) =$ | 1/256 | $HQ(25) =$ | -1/256 |

(continued)

| HI(26) = | 0/256 | HQ(26) = | 3/256 |
|---|---|---|---|
| HI(27) = | -6/256 | HQ(27) = | -1/256 |
| HI(28) = | -2/256 | HQ(28) = | -4/256 |
| HI(29) = | 5/256 | HQ(29) = | -2/256 |

**30.** A method according to Claim 28 for demodulating a B or G system signal in which the coefficients of the I and Q channel matched filters are:

| HI(0) = | 22/256 | HQ(0) = | 3/256 |
|---|---|---|---|
| HI(1) = | 18/256 | HQ(1) = | 9/256 |
| HI(2) = | 8/256 | HQ(2) = | 18/256 |
| HI(3) = | -3/256 | HQ(3) = | 29/256 |
| HI(4) = | -16/256 | HQ(4) = | 37/256 |
| HI(5) = | -30/256 | HQ(5) = | 38/256 |
| HI(6) = | -44/256 | HQ(6) = | 27/256 |
| HI(7) = | -56/256 | HQ(7) = | 5/256 |
| HI(8) = | -62/256 | HQ(8) = | -25/256 |
| HI(9) = | -57/256 | HQ(9) = | -55/256 |
| HI(10) = | -36/256 | HQ(10) = | -77/256 |
| HI(11) = | -2/256 | HQ(11) = | -86/256 |
| HI(12) = | 39/256 | HQ(12) = | -79/256 |
| HI(13) = | 75/256 | HQ(13) = | -55/256 |
| HI(14) = | 97/256 | HQ(14) = | -20/256 |
| HI(15) = | 97/256 | HQ(15) = | 20/256 |
| HI(16) = | 75/256 | HQ(16) = | 55/256 |
| HI(17) = | 39/256 | HQ(17) = | 79/256 |
| HI(18) = | -3/256 | HQ(18) = | 86/256 |
| HI(19) = | -36/256 | HQ(19) = | 77/256 |
| HI(20) = | -56/256 | HQ(20) = | 54/256 |
| HI(21) = | -62/256 | HQ(21) = | 24/256 |
| HI(22) = | -56/256 | HQ(22) = | -5/256 |
| HI(23) = | -44/256 | HQ(23) = | -27/256 |
| HI(24) = | -30/256 | HQ(24) = | -38/256 |
| HI(25) = | -16/256 | HQ(25) = | -37/256 |
| HI(26) = | -3/256 | HQ(26) = | -29/256 |
| HI(27) = | 9/256 | HQ(27) = | -18/256 |
| HI(28) = | 18/256 | HQ(28) = | -9/256 |
| HI(29) = | 22/256 | HQ(29) = | -3/256 |

and the outputs of the matched filters are subjected to feedforward equalisation respectively for the I and Q channels having the coefficients:

| FFEI(0) = | -52/256 | FFEEQ(0) = | -52/256 |
|---|---|---|---|
| FFEI(1) = | 1 | FFEQ(1) = | 1 |
| FFEI(2) = | -52/256 | FFEQ(2) = | -52/256 |

**Patentansprüche**

**1.** Signalverarbeitungsvorrichtung mit

18

Abtastmitteln (1) zum Abtasten eines Eingangssignals, um eine Reihe von Abtastwerten zu erzeugen, wobei die Abtastmittel (1) die Reihe von Abtastwerten in ein digitales Signal umwandeln;
ersten Filterungsmitteln (2), die das digitale Signal filtern und ein dieses kennzeichnendes gefiltertes Signal erzeugen;
Auswählmitteln (3), die wenigstens einen Abtastwert aus der Reihe von Abtastwerten auswählen und ein ausgewähltes Signal erzeugen, das die übrigen Abtastwerte repräsentiert;
zweiten Filterungsmitteln (in 4), die das ausgewählte und die übrigen Abtastwerte repräsentierende Signal filtern und ein dieses kennzeichnendes gefiltertes digitales Signal erzeugen; und
Mitteln (4) zur digitalen Signalverarbeitung, die auf das gefilterte von den zweiten Filterungsmitteln (in 4) empfangene digitale Signal ansprechen, wobei die Mittel (4) zur digitalen Signalverarbeitung so ausgebildet sind, daß sie ein Ausgangssignal mit einem vorherdefinierten Frequenzband in einer vorherbestimmten Spektrumsform erzeugen.

2. Vorrichtung nach Anspruch 1, bei der die Kennlinie der ersten digitalen Filterungsmittel eine Spitze in dem gewünschten Frequenzband und ein oder mehrere Täler in den jeweiligen Frequenzbändern aufweist, die das gewünschte Frequenzband infolge des Betriebs der Auswählmittel überlagern.

3. Vorrichtung nach Anspruch 2, bei der die ersten digitalen Filterungsmittel mehrere hintereinandergeschaltete Kammfilter umfassen.

4. Vorrichtung nach Anspruch 2 oder Anspruch 3, bei der die Auswählmittel so ausgebildet sind, daß sie das gefilterte Signal, das einen Abtastwert repräsentiert, aus jeder Gruppe gefilterer Signale auswählt, die drei Abtastwerte repräsentiert.

5. Vorrichtung nach einem der vorhergehenden Ansprüche, bei der das Eingangssignal Darstellungen von Zeichen umfaßt, die bei einer zweiten Wiederholungsgeschwindigkeit erzeugt werden und aus Abtastwerten abgeleitet werden, die aus einem Eingangssignal bei einer ersten Wiederholungsgeschwindigkeit genommen werden, wobei die Abtastgeschwindigkeit der Abtastmittel ein Vielfaches der ersten Wiederholungsgeschwindigkeit beträgt und der Betrieb der Auswählmittel periodisch so verändert wird, daß die mittlere Wiederholungsgeschwindigkeit des ausgewählten gefilterten digitalen Signals ein Vielfaches der zweiten Wiederholungsgeschwindigkeit beträgt.

6. Vorrichtung nach einem der vorhergehenden Ansprüche, bei der die Mittel zur digitalen Signalverarbeitung, Mittel, die periodisch Abtastwerte von den von den zweiten digitalen Filterungsmitteln empfangenen Signalen verarbeiten, und Mittel umfassen, die ein pulsbreitenmoduliertes Ausgangssignal aus den verarbeiteten Abtastwerten erzeugen, wobei das pulsbreitenmodulierte Ausgangssignal nach dem Glätten als automatisches Verstärkungsregelungssignal zur Begrenzung des dynamischen Bereichs des an die Vorrichtung angelegten Signals verwendet werden kann.

7. Vorrichtung nach Anspruch 6, bei der die Abtastmittel so ausgebildet sind, daß sie ein Übersteuerungssignal erzeugen, wenn das Eingangssignal einen maximalen Wert erreicht, der noch digitalisiert werden kann, wobei das Übersteuerungssignal verwendet werden kann, um das automatische Verstärkungsregelungssignal zu verändern.

8. Vorrichtung nach einem der vorhergehenden Ansprüche, bei der das Eingangssignal ein durch Quadratur-Phasenumtastung (QPSK) erzeugtes Signal ist und die Mittel zur digitalen Signalverarbeitung als Demodulator wirken und zwei angepaßte Filter für die Quadratur-Komponenten des Signals sowie Phasendrehermittel umfassen, die auf die Ausgangssignale der angepaßten Filter ansprechen, um die Werte der Signalkomponenten so einzustellen, daß sich das Signal in einer Referenzphase befindet.

9. Vorrichtung nach Anspruch 8, bei der die Mittel zur Signalverarbeitung Mittel zum Unterteilen der von den zweiten digitalen Filterungsmitteln empfangenen Signale in Zeichen repräsentierende Gruppen und zum Einstellen der Position der Unterteilung in Reaktion auf den Energiegehalt der Gruppen umfassen, so daß die Unterteilung der Signale in Zeichen repräsentierende Gruppen korrigiert wird.

10. Vorrichtung nach Anspruch 9, bei der die Abtastmittel Oszillatormittel umfassen, um die Momente der Abtastung des Eingangssignals zu bestimmen, wobei die Oszillatormittel auch als Auswählmittel arbeiten und die Frequenz der Oszillatormittel in Reaktion auf den Energiegehalt der Zeichen repräsentiereden Signalgruppen eingestellt werden kann.

**11.** Vorrichtung nach einem der vorhergehenden Ansprüche, bei der die ersten Filterungsmittel, die Auswählmittel, die zweiten Filterungsmittel, die Mittel zur digitalen Signalverarbeitung und die Verbindungen zwischen diesen durch einen geeignet programmierten Mikroprozessor gebildet werden.

**12.** Vorrichtung nach einem der Ansprüche 8 bis 10, bei der die ersten Filterungsmittel, die Auswählmittel, die zweiten Filterungsmittel und die Mittel zur digitalen Signalverarbeitung durch einen geeignet programmierten Mikroprozessor gebildet werden, der zwei getrennte Verarbeitungseinheiten aufweist, um die zwei Quadratur-Komponenten jeweils mit gleichen und zusammenarbeitenden Programmen zu verarbeiten, wobei jede der Verarbeitungseinheiten Zugang zu den Speicherregistern der jeweils anderen Verarbeitungseinheit hat.

**13.** Vorrichtung nach einem der Ansprüche 8 bis 12, bei der das Eingangssignal ein durch Quadratur-Phasendifferenzumtastung (QDPSK) moduliertes Signal ist.

**14.** Vorrichtung nach Anspruch 12, bei der das Eingangssignal ein Signal vom Typ NICAM 728 ist.

**15.** Vorrichtung nach Anspruch 14 zum Demodulieren eines I-System-Signals, bei der die Koeffizienten der angepaßten Filter des I- und Q-Kanals die folgenden sind:

| HI(0) = | 5/256 | HQ(0) = | 2/256 |
|---|---|---|---|
| HI(1) = | -2/256 | HQ(1) = | 5/256 |
| HI(2) = | -6/256 | HQ(2) = | 2/256 |
| HI(3) = | 0/256 | HQ(3) = | -3/256 |
| HI(4) = | 1/256 | HQ(4) = | 1/256 |
| HI(5) = | -9/256 | HQ(5) = | 0/256 |
| HI(6) = | -2/256 | HQ(6) = | -18/256 |
| HI(7) = | 32/256 | HQ(7) = | -11/256 |
| HI(8) = | 28/256 | HQ(8) = | 40/256 |
| HI(9) = | -46/256 | HQ(9) = | 52/256 |
| HI(10) = | -80/256 | HQ(10) = | -38/256 |
| HI(11) = | 20/256 | HQ(11) = | -106/256 |
| HI(12) = | 123/256 | HQ(12) = | -12/256 |
| HI(13) = | 49/256 | HQ(13) = | 127/256 |
| HI(14) = | -113/256 | HQ(14) = | 86/256 |
| HI(15) = | -113/256 | HQ(15) = | -87/256 |
| HI(16) = | 49/256 | HQ(16) = | -127/256 |
| HI(17) = | 123/256 | HQ(17) = | 12/256 |
| HI(18) = | 20/256 | HQ(18) = | 106/256 |
| HI(19) = | -80/256 | HQ(19) = | 38/256 |
| HI(20) = | -46/256 | HQ(20) = | -52/256 |
| HI(21) = | 28/256 | HQ(21) = | -40/256 |
| HI(22) = | 32/256 | HQ(22) = | 11/256 |
| HI(23) = | -3/256 | HQ(23) = | 18/256 |
| HI(24) = | -9/256 | HQ(24) = | 0/256 |
| HI(25) = | 1/256 | HQ(25) = | -1/256 |
| HI(26) = | 0/256 | HQ(26) = | 3/256 |
| HI(27) = | -6/256 | HQ(27) = | -1/256 |
| HI(28) = | -2/256 | HQ(28) = | -4/256 |
| HI(29) = | 5/256 | HQ(29) = | -2/256 |

**16.** Vorrichtung nach Anspruch 14 zum Demodulieren eines G-System-Signals, bei der die Koeffizienten der angepaßten Filter des I- und Q-Kanals die folgenden sind:

| HI(0) = | 22/256 | HQ(0) = | 3/256 |
|---|---|---|---|
| HI(1) = | 18/256 | HQ(1) = | 9/256 |

(fortgesetzt)

| | | | |
|---|---|---|---|
| HI(2) = | 8/256 | HQ(2) = | 18/256 |
| HI(3) = | -3/256 | HQ(3) = | 29/256 |
| HI(4) = | -16/256 | HQ(4) = | 37/256 |
| HI(5) = | -30/256 | HQ(5) = | 38/256 |
| HI(6) = | -44/256 | HQ(6) = | 27/256 |
| HI(7) = | -56/256 | HQ(7) = | 5/256 |
| HI(8) = | -62/256 | HQ(8) = | -25/256 |
| HI(9) = | -57/256 | HQ(9) = | -55/256 |
| HI(10) = | -36/256 | HQ(10) = | -77/256 |
| HI(11) = | -2/256 | HQ(11) = | -86/256 |
| HI(12) = | 39/256 | HQ(12) = | -79/256 |
| HI(13) = | 75/256 | HQ(13) = | -55/256 |
| HI(14) = | 97/256 | HQ(14) = | -20/256 |
| HI(15) = | 97/256 | HQ(15) = | 20/256 |
| HI(16) = | 75/256 | HQ(16) = | 55/256 |
| HI(17) = | 39/256 | HQ(17) = | 79/256 |
| HI(18) = | -3/256 | HQ(18) = | 86/256 |
| HI(19) = | -36/256 | HQ(19) = | 77/256 |
| HI(20) = | -56/256 | HQ(20) = | 54/256 |
| HI(21) = | -62/256 | HQ(21) = | 24/256 |
| HI(22) = | -56/256 | HQ(22) = | -5/256 |
| HI(23) = | -44/256 | HQ(23) = | -27/256 |
| HI(24) = | -30/256 | HQ(24) = | -38/256 |
| HI(25) = | -16/256 | HQ(25) = | -37/256 |
| HI(26) = | -3/256 | HQ(26) = | -29/256 |
| HI(27) = | 9/256 | HQ(27) = | -18/256 |
| HI(28) = | 18/256 | HQ(28) = | -9/256 |
| HI(29) = | 22/256 | HQ(29) = | -3/256 |

und die Ausgangssignale der angepaßten Filter jeweils an Mitkopplungsentzerrer angelegt werden, die für den I- bzw. Q-Kanal die folgenden Koeffizienten aufweisen:

| | | | |
|---|---|---|---|
| FFEI(0) = | -52/256 | FFEQ(0) = | -52/256 |
| FFEI(1) = | 1 | FFEQ(1) | = 1 |
| FFEI(2) = | -52/256 | FFEQ(2) = | -52/256 |

17. Verfahren zum Verarbeiten eines Eingangssignals, bei dem

ein Eingangssignal abgetastet wird, um eine Reihe von Abtastwerten zu erzeugen, und die Reihe von Abtastwerten in ein digitales Signal umgewandelt wird;

das digitale Signal einem ersten Filterungsprozeß unterzogen wird und ein dieses kennzeichnendes gefiltertes Signal erzeugt wird;

wenigstens ein Abtastwert aus der Reihe von Abtastwerten ausgewählt wird und ein ausgewähltes Signal erzeugt wird, das die übrigen Abtastwerte repräsentiert;

das ausgewählte und die übrigen Abtastwerte repräsentierende Signal einem zweiten Filterungsprozeß unterzogen wird und ein dieses kennzeichnendes gefiltertes digitales Signal erzeugt wird; und

Mittel (4) zur digitalen Signalverarbeitung vorgesehen werden, die auf das gefilterte digitale Signal ansprechen, um ein Ausgangssignal mit einem vorherdefinierten Frequenzband in einer vorherbestimmten Spektrumsform zu erzeugen.

18. Verfahren nach Anspruch 17, bei dem die Kennlinie des ersten Filterungsschritts eine Spitze in dem gewünschten Frequenzband und ein oder mehrere Täler in den jeweiligen Frequenzbändern aufweist, die das gewünschte Frequenzband in Folge der Auswähloperation überlagern.

19. Verfahren nach Anspruch 18, bei der der erste Filterungsschritt durch mehrere hintereinandergeschaltete Kammfilter gekennzeichnet ist.

20. Verfahren nach Anspruch 18 oder Anspruch 19, bei dem der Auswähltschritt so abläuft, daß die einen Abtastwert repräsentierenden digitalen Signale aus jeder Gruppe digitaler Signale ausgewählt werden, die drei Abtastwerte repräsentiert.

21. Verfahren nach einem der Ansprüche 17 bis 19, bei dem das Eingangssignal Darstellungen von Zeichen umfaßt, die bei einer zweiten Wiederholungsgeschwindigkeit erzeugt werden und aus Abtastwerten abgeleitet werden, die aus einem ursprünglichen Signal bei einer ersten Wiederholungsgeschwindigkeit genommen werden, wobei die Abtastgeschwindigkeit, mit der das Eingangssignal abgetastet wird, ein Vielfaches der ersten Wiederholungsgeschwindigkeit beträgt und das Auswählen periodisch so verändert wird, daß die mittlere Wiederholungsgeschwindigkeit der ausgewählten digitalen Ausgangssignale ein Vielfaches der zweiten Wiederholungsgeschwindigkeit beträgt.

22. Verfahren nach einem der Ansprüche 17 bis 21, bei dem das Mittel zur digitalen Signalverarbeitung in der Weise arbeitet, daß es periodisch Abtastwerte von den von ihm empfangenen Signalen verarbeitet und ein pulsbreitenmoduliertes Ausgangssignal aus den verarbeiteten Abtastwerten erzeugt, wobei das pulsbreitenmodulierte Ausgangssignal nach dem Glätten als automatisches Verstärkungsregelungssignal zur Begrenzung des dynamischen Bereichs des Eingangssignals verwendet werden kann.

23. Verfahren nach Anspruch 22, bei dem darüber hinaus ein Übersteuerungssignal erzeugt wird, wenn das Eingangssignal einen maximalen Wert erreicht, der noch digitalisiert werden kann, wobei das Übersteuerungssignal verwendet werden kann, um das automatische Verstärkungsregelungssignal zu verändern.

24. Verfahren nach einem der Ansprüch 17 bis 23, bei dem das Eingangssignal ein durch Quadratur-Phasenumtastung (QPSK) erzeugtes Signal ist und die Mittel zur digitalen Signalverarbeitung als Demodulator arbeiten, der angepaßte Filter auf die Quadratur-Komponenten des Signals wirken läßt und auf die Werte dieser Komponenten so reagiert, daß sie so eingestellt werden, daß sich das Signal in einer Referenzphase befindet.

25. Verfahren nach Anspruch 24, bei dem das Mittel zur Signalverarbeitung die von ihm empfangenen Signale in Zeichen repräsentierende Gruppen unterteilt und die Position der Unterteilung in Reaktion auf den Energiegehalt der Gruppen einstellt.

26. Verfahren nach Anspruch 25, bei der die Frequenz einer Oszillation in Reaktion auf den Energiegehalt der Gruppen eingestellt wird, wobei der Oszillator die Momente der Abtastung des Eingangssignals und die Position der Unterteilung in Gruppen bestimmt.

27. Verfahren nach einem der Ansprüche 25 bis 27, bei dem das Eingangssignal ein durch Quadratur-Phasendifferenzumtastung (QDPSK) moduliertes Signal ist.

28. Verfahren nach Anspruch 27, bei dem das Eingangssignal ein Signal vom Typ NICAM 728 ist.

29. Verfahren nach Anspruch 28 zum Demodulieren eines I-System-Signals, bei der die Koeffizienten der angepaßten Filter des I- und Q-Kanals die folgenden sind:

| HI(0) = | 5/256 | HQ(0) = | 2/256 |
|---|---|---|---|
| HI(1) = | -2/256 | HQ(1) = | 5/256 |
| HI(2) = | -6/256 | HQ(2) = | 2/256 |
| HI(3) = | 0/256 | HQ(3) = | -3/256 |
| HI(4) = | 1/256 | HQ(4) = | 1/256 |
| HI(5) = | -9/256 | HQ(5) = | 0/256 |
| HI(6) = | -2/256 | HQ(6) = | -18/256 |
| HI(7) = | 32/256 | HQ(7) = | -11/256 |

(fortgesetzt)

| | | | |
|---|---|---|---|
| HI(8) = | 28/256 | HQ(8) = | 40/256 |
| HI(9) = | -46/256 | HQ(9) = | 52/256 |
| HI(10) = | -80/256 | HQ(10) = | -38/256 |
| HI(11) = | 20/256 | HQ(11) = | -106/256 |
| HI(12) = | 123/256 | HQ(12) = | -12/256 |
| HI(13) = | 49/256 | HQ(13) = | 127/256 |
| HI(14) = | -113/256 | HQ(14) = | 86/256 |
| HI(15) = | -113/256 | HQ(15) = | -87/256 |
| HI(16) = | 49/256 | HQ(16) = | -127/256 |
| HI(17) = | 123/256 | HQ(17) = | 12/256 |
| HI(18) = | 20/256 | HQ(18) = | 106/256 |
| HI(19) = | -80/256 | HQ(19) = | 38/256 |
| HI(20) = | -46/256 | HQ(20) = | -52/256 |
| HI(21) = | 28/256 | HQ(21) = | -40/256 |
| HI(22) = | 32/256 | HQ(22) = | 11/256 |
| HI(23) = | -3/256 | HQ(23) = | 18/256 |
| HI(24) = | -9/256 | HQ(24) = | 0/256 |
| HI(25) = | 1/256 | HQ(25) = | -1/256 |
| HI(26) = | 0/256 | HQ(26) = | 3/256 |
| HI(27) = | -6/256 | HQ(27) = | -1/256 |
| HI(28) = | -2/256 | HQ(28) = | -4/256 |
| HI(29) = | 5/256 | HQ(29) = | -2/256 |

30. Verfahren nach Anspruch 28 zum Demodulieren eines G-System-Signals, bei der die Koeffizienten der angepaßten Filter des I-und Q-Kanals die folgenden sind:

| | | | |
|---|---|---|---|
| HI(0) = | 22/256 | HQ(0) = | 3/256 |
| HI(1) = | 18/256 | HQ(1) = | 9/256 |
| HI(2) = | 8/256 | HQ(2) = | 18/256 |
| HI(3) = | -3/256 | HQ(3) = | 29/256 |
| HI(4) = | -16/256 | HQ(4) = | 37/256 |
| HI(5) = | -30/256 | HQ(5) = | 38/256 |
| HI(6) = | -44/256 | HQ(6) = | 27/256 |
| HI(7) = | -56/256 | HQ(7) = | 5/256 |
| HI(8) = | -62/256 | HQ(8) = | -25/256 |
| HI(9) = | -57/256 | HQ(9) = | -55/256 |
| HI(10) = | -36/256 | HQ(10) = | -77/256 |
| HI(11) = | -2/256 | HQ(11) = | -86/256 |
| HI(12) = | 39/256 | HQ(12) = | -79/256 |
| HI(13) = | 75/256 | HQ(13) = | -55/256 |
| HI(14) = | 97/256 | HQ(14) = | -20/256 |
| HI(15) = | 97/256 | HQ(15) = | 20/256 |
| HI(16) = | 75/256 | HQ(16) = | 55/256 |
| HI(17) = | 39/256 | HQ(17) = | 79/256 |
| HI(18) = | -3/256 | HQ(18) = | 86/256 |
| HI(19) = | -36/256 | HQ(19) = | 77/256 |
| HI(20) = | -56/256 | HQ(20) = | 54/256 |
| HI(21) = | -62/256 | HQ(21) = | 24/256 |
| HI(22) = | -56/256 | HQ(22) = | -5/256 |
| HI(23) = | -44/256 | HQ(23) = | -27/256 |
| HI(24) = | -30/256 | HQ(24) = | -38/256 |

(fortgesetzt)

| | | | |
|---|---|---|---|
| HI(25) = | -16/256 | HQ(25) = | -37/256 |
| HI(26) = | -3/256 | HQ(26) = | -29/256 |
| HI(27) = | 9/256 | HQ(27) = | -18/256 |
| HI(28) = | 18/256 | HQ(28) = | -9/256 |
| HI(29) = | 22/256 | HQ(29) = | -3/256 |

und die Ausgangssignale der angepaßten Filter jeweils einer Mitkopplungsentzerrung mit folgenden Koeffizienten für den I-bzw. Q-Kanal unterzogen werden:

| | | | |
|---|---|---|---|
| FFEI(0) = | -52/256 | FFEQ(0) = | -52/256 |
| FFEI(1) = | 1 | FFEQ(1) = | 1 |
| FFEI(2) = | -52/256 | FFEQ(2) = | -52/256 |

**Revendications**

1. Appareil de traitement de signal comprenant :

   un moyen d'échantillonnage (1) pour échantillonner un signal d'entrée afin de produire une séquence d'échantillons, ledit moyen d'échantillonnage (1) convertissant ladite séquence d'échantillons en un signal numérique ;
   un premier moyen de filtrage (2) pour filtrer ledit signal numérique, ledit premier moyen de filtrage produisant un signal filtré indicatif de celui-ci ;
   un moyen de sélection (3) pour sélectionner au moins un échantillon dans ladite séquence d'échantillons et pour produire un signal sélectionné représentatif desdits échantillons restants ;
   un second moyen de filtrage (dans 4) pour filter ledit signal sélectionné représentant lesdits signaux restants et pour produire un signal numérique filtré indicatif de celui-ci ; et
   un moyen de traitement de signal numérique (4) sensible audit signal numérique filtré reçu dudit second moyen de filtrage (dans 4), ledit moyen de traitement numérique (4) étant adapté pour produire un signal de sortie ayant une bande de fréquences prédéfinie dans une conformation de spectre prédéterminée.

2. Appareil selon la revendication 1, dans lequel la caractéristique du premier moyen de filtrage numérique a un pic dans la bande de fréquences souhaitée et une ou plusieurs vallées dans des bandes de fréquences respectives qui recouvrent la bande de fréquence souhaitée à la suite du fonctionnement du moyen de sélection.

3. Appareil selon la revendication 2, dans lequel le premier moyen de filtrage numérique comprend une série de filtres-peigne en cascade.

4. Appareil selon la revendication 2 ou 3, dans lequel le moyen de sélection est adapté pour sélectionner le signal filtré représentant un échantillon dans chaque groupe des signaux filtrés représentant trois échantillons.

5. Appareil selon l'une quelconque des revendications précédentes, dans lequel le signal d'entrée comprend des représentations de symboles produites à une seconde fréquence de répétition et tirées d'échantillons prélevés dans un signal d'entrée à une première fréquence de répétition, la vitesse d'échantillonnage du moyen d'échantillonnage étant un multiple de la première fréquence de répétition et le fonctionnement du moyen de sélection étant périodiquement modifié de telle sorte que la fréquence de répétition moyenne du signal numérique filtré sélectionné soit un multiple de la seconde fréquence de répétition.

6. Appareil selon l'une quelconque des revendications précédentes, dans lequel le moyen de traitement de signal numérique comprend un moyen pour traiter périodiquement des échantillons des signaux reçus du second moyen de filtrage numérique, et un moyen pour produire un signal de sortie modulé en largeur d'impulsion à partir des échantillons traités, le signal de sortie modulé en largeur d'impulsion étant utilisable après lissage comme signal de commande automatique de gain pour limiter la plage dynamique du signal appliqué à l'appareil.

7. Appareil selon la revendication 6, dans lequel le moyen d'échantillonnage est adapté pour produire un signal de surcharge lorsque le signal d'entrée atteint une valeur maximale qui peut être numérisée, le signal de surcharge étant utilisable pour modifier le signal de commande automatique de gain.

8. Appareil selon l'une quelconque des revendications précédentes, dans lequel le signal d'entrée est un signal modulé en quadrature de phase et le moyen de traitement de signal numérique fonctionne comme un démodulateur et comprend deux filtres adaptés pour les composantes en quadrature du signal et un moyen rotatif sensible aux sorties des filtres adaptés pour ajuster les valeurs des composantes du signal de telle sorte que le signal soit dans une phase de référence.

9. Appareil selon la revendication 8, dans lequel le moyen de traitement de signal comprend un moyen pour subdiviser les signaux reçus du second moyen de filtrage numérique en groupes représentant des symboles et pour ajuster la position de la subdivision en réponse à la teneur énergétique des groupes de manière à corriger la subdivision des signaux en groupes représentant des symboles.

10. Appareil selon la revendication 9, dans lequel le moyen d'échantillonnage comprend un moyen oscillateur pour déterminer les instants d'échantillonnage du signal d'entrée, le moyen oscillateur faisant également fonctionner le moyen de sélection, dans lequel la fréquence du moyen oscillateur est ajustable en réponse à la teneur énergétique des groupes de signaux représentant des symboles.

11. Apareil selon l'une quelconque des revendications précédentes, dans lequel le premier moyen de filtrage, le moyen de sélection, le second moyen de filtrage, le moyen de traitement de signal numérique et les interconnexions entre eux sont formés par un microprocesseur programmé de manière appropriée.

12. Appareil selon l'une quelconque des revendications 8 à 10, dans lequel le premier moyen de filtrage, le moyen de sélection, le second moyen de filtrage et le moyen de traitement de signal numérique sont tous formés par un moyen à microprocesseur programmé de manière appropriée ayant deux unités de traitement séparées pour, respectivement, traiter les deux composantes en quadrature avec des programmes similaires coopérant entre eux, chacune des unités de traitement ayant accès à des registres de stockage de l'autre unité de traitement.

13. Appareil selon l'une quelconque des revendications 8 à 12, dans lequel le signal d'entrée est un signal modulé par déplacement de phase en quadrature différentiel.

14. Appareil selon la revendication 12, dans lequel le signal d'entrée comprend un signal NICAM 728.

15. Appareil selon la revendication 14 pour démoduler un signal de système I dans lequel les coefficients des filtres adaptés des canaux I et Q sont les suivants :

| HI(0) = | 5/256 | HQ(0) = | 2/256 |
|---|---|---|---|
| HI(1) = | -2/256 | HQ(1) = | 5/256 |
| HI(2) = | -6/256 | HQ(2) = | 2/256 |
| HI(3) = | 0/256 | HQ(3) = | -3/256 |
| HI(4) = | 1/256 | HQ(4) = | 1/256 |
| HI(5) = | -9/256 | HQ(5) = | 0/256 |
| HI(6) = | -2/256 | HQ(6) = | -18/256 |
| HI(7) = | 32/256 | HQ(7) = | -11/256 |
| HI(8) = | 28/256 | HQ(8) = | 40/256 |
| HI(9) = | -46/256 | HQ(9) = | 52/256 |
| HI(10) = | -80/256 | HQ(10) = | -38/256 |
| HI(11) = | 20/256 | HQ(11) = | -106/256 |
| HI(12) = | 123/256 | HQ(12) = | -12/256 |
| HI(13) = | 49/256 | HQ(13) = | 127/256 |
| HI(14) = | -113/256 | HQ(14) = | 86/256 |
| HI(15) = | -113/256 | HQ(15) = | -87/256 |
| HI(16) = | 49/256 | HQ(16) = | -127/256 |
| HI(17) = | 123/256 | HQ(17) = | 12/256 |
| HI(18) = | 20/256 | HQ(18) = | 106/256 |

(suite)

| | | | |
|---|---|---|---|
| HI(19) = | -80/256 | HQ(19) = | 38/256 |
| HI(20) = | -46/256 | HQ(20) = | -52/256 |
| HI(21) = | 28/256 | HQ(21) = | -40/256 |
| HI(22) = | 32/256 | HQ(22) = | 11/256 |
| HI(23) = | -3/256 | HQ(23) = | 18/256 |
| HI(24) = | -9/256 | HQ(24) = | 0/256 |
| HI(25) = | 1/256 | HQ(25) = | -1/256 |
| HI(26) = | 0/256 | HQ(26) = | 3/256 |
| HI(27) = | -6/256 | HQ(27) = | -1/256 |
| HI(28) = | -2/256 | HQ(28) = | -4/256 |
| HI(29) = | 5/256 | HQ(29) = | -2/256. |

16. Appareil selon la revendication 14 pour démoduler un signal de système B ou G dans lequel les coefficients des filtres adaptés des canaux I et Q sont les suivants :

| | | | |
|---|---|---|---|
| HI(0) = | 22/256 | HQ(0) = | 3/256 |
| HI(1) = | 18/256 | HQ(1) = | 9/256 |
| HI(2) = | 8/256 | HQ(2) = | 18/256 |
| HI(3) = | -3/256 | HQ(3) = | 29/256 |
| HI(4) = | -16/256 | HQ(4) = | 37/256 |
| HI(5) = | -30/256 | HQ(5) = | 38/256 |
| HI(6) = | -44/256 | HQ(6) = | 27/256 |
| HI(7) = | -56/256 | HQ(7) = | 5/256 |
| HI(8) = | -63/256 | HQ(8) = | -25/256 |
| HI(9) = | -57/256 | HQ(9) = | -55/256 |
| HI(10) = | -36/256 | HQ(10) = | -77/256 |
| HI(11) = | -2/256 | HQ(11) = | -86/256 |
| HI(12) = | 39/256 | HQ(12) = | -79/256 |
| HI(13) = | 75/256 | HQ(13) = | -55/256 |
| HI(14) = | 97/256 | HQ(14) = | -20/256 |
| HI(15) = | 97/256 | HQ(15) = | 20/256 |
| HI(16) = | 75/256 | HQ(16) = | 55/256 |
| HI(17) = | 39/256 | HQ(17) = | 79/256 |
| HI(18) = | -3/256 | HQ(18) = | 86/256 |
| HI(19) = | -36/256 | HQ(19) = | 77/256 |
| HI(20) = | -56/256 | HQ(20) = | 54/256 |
| HI(21) = | -62/256 | HQ(21) = | 24/256 |
| HI(22) = | -56/256 | HQ(22) = | -5/256 |
| HI(23) = | -44/256 | HQ(23) = | -27/256 |
| HI(24) = | -30/256 | HQ(24) = | -38/256 |
| HI(25) = | -16/256 | HQ(25) = | -37/256 |
| HI(26) = | -3/256 | HQ(26) = | -29/256 |
| HI(27) = | 9/256 | HQ(27) = | -18/256 |
| HI(28) = | 18/256 | HQ(28) = | -9/256 |
| HI(29) = | 22/256 | HQ(29) = | -3/256 |

et les sorties des filtres adaptés sont appliquées à des égaliseurs directs, respectivement, pour les canaux I et Q ayant les coefficients :

| | | | |
|---|---|---|---|
| FFEI(0) = | -52/256 | FFEQ(0) = | -52/256 |
| FFEI(1) = | 1 | FFEQ(1) = | 1 |

(suite)

| FFEI(2) = | -52/256 | FFEQ(2) = | -52/256 |
|-----------|---------|-----------|---------|

**17.** Procédé de traitement de signal comprenant les étapes consistant :

à échantillonner un signal d'entrée afin de produire une séquence d'échantillons et à convertir ladite séquence d'échantillons en un signal numérique;

à filtrer une première fois ledit signal numérique et à produire un signal filtré indicatif de celui-ci;

à sélectionner au moins un échantillon dans ladite séquence d'échantillons et à produire un signal sélectionné représentatif desdits échantillons restants;

à filtrer une seconde fois ledit signal sélectionné représentant lesdits signaux restants et à produire un signal numérique filtré indicatif de celui-ci; et

à mettre en oeuvre un moyen de traitement de signal numérique (4) sensible audit signal numérique filtré pour produire un signal de sortie ayant une bande de fréquences prédéfinie dans une conformation de spectre prédéterminée.

**18.** Procédé selon la revendication 17, dans lequel la caractéristique de la première étape de filtrage a un pic dans la bande de fréquences souhaitée et une ou plusieurs vallées dans des bandes de fréquences respectives qui recouvrent la bande de fréquence souhaitée à la suite de l'opération de sélection.

**19.** Procédé selon la revendication 18, dans lequel la première étape de filtrage a la caractéristique d'une série de filtres-peigne en cascade.

**20.** Procédé selon la revendication 18 ou 19, dans lequel l'étape de sélection est telle que les signaux numériques représentant un échantillon soient sélectionnés dans chaque groupe de signaux filtrés représentant trois échantillons.

**21.** Procédé selon l'une quelconque des revendications 17 à 19, dans lequel le signal d'entrée comprend des représentations de symboles produites à une seconde fréquence de répétition et tirées d'échantillons prélevés dans un signal original à une première fréquence de répétition, la vitesse d'échantillonnage appliquée au signal d'entrée étant un multiple de la première fréquence de répétition et la sélection étant périodiquement modifiée de telle sorte que la fréquence de répétition moyenne des signaux de sortie numériques sélectionnés soit un multiple de la seconde fréquence de répétition.

**22.** Procédé selon l'une quelconque des revendications 17 à 21, dans lequel le moyen de traitement de signal numérique traite périodiquement des échantillons des signaux qu'il reçoit et produit un signal de sortie modulé en largeur d'impulsion à partir des échantillons traités, le signal de sortie modulé en largeur d'impulsion étant utilisable après lissage comme signal de commande automatique de gain pour limiter la plage dynamique du signal d'entrée.

**23.** Procédé selon la revendication 22, comprenant par ailleurs la production d'un signal de surcharge lorsque le signal d'entrée atteint une valeur maximale qui peut être numérisée, le signal de surcharge étant utilisable pour modifier le signal de commande automatique de gain.

**24.** Procédé selon l'une quelconque des revendications 17 à 23, dans lequel le signal d'entrée est un signal modulateur en quadrature de phase et le moyen de traitement de signal numérique fonctionne comme un démodulateur qui applique des filtres adaptés aux composantes en quadrature du signal et qui est sensible aux valeurs de ces composantes de manière à les ajuster de telle sorte que le signal soit dans une phase de référence.

**25.** Procédé selon la revendication 24, dans lequel le moyen de traitement de signal subdivise les signaux qu'il reçoit en groupes représentant des symboles, la position de la subdivision étant ajustée en réponse à la teneur énergétique des groupes.

**26.** Procédé selon la revendication 25, dans lequel la fréquance d'une oscillation est ajustée en réponse à la teneur énergétique des groupes, l'oscillateur déterminant les instants d'échantillonnage du signal d'entrée et la position de la subdivision en groupes.

**27.** Procédé selon l'une quelconque des revendications 25 à 27, dans lequel le signal d'entrée est un signal modulé par déplacement de phase en quadrature différentiel.

**28.** Procédé selon la revendication 27, dans lequel le signal d'entrée comprend un signal NICAM 728.

**29.** Procédé selon la revendication 28 pour démoduler un signal de système I dans lequel les coefficients des filtres adaptés des canaux I et Q sont les suivants :

| HI(0) = | 5/256 | HQ(0) = | 2/256 |
|---|---|---|---|
| HI(1) = | -2/256 | HQ(1) = | 5/256 |
| HI(2) = | -6/256 | HQ(2) = | 2/256 |
| HI(3) = | 0/256 | HQ(3) = | -3/256 |
| HI(4) = | 1/256 | HQ(4) = | 1/256 |
| HI(5) = | -9/256 | HQ(5) = | 0/256 |
| HI(6) = | -2/256 | HQ(6) = | -18/256 |
| HI(7) = | 32/256 | HQ(7) = | -11/256 |
| HI(8) = | 28/256 | HQ(8) = | 40/256 |
| HI(9) = | -46/256 | HQ(9) = | 52/256 |
| HI(10) = | -80/256 | HQ(10) = | -38/256 |
| HI(11) = | 20/256 | HQ(11) = | -106/256 |
| HI(12) = | 123/256 | HQ(12) = | -12/256 |
| HI(13) = | 49/256 | HQ(13) = | 127/256 |
| HI(14) = | -113/256 | HQ(14) = | 86/256 |
| HI(15) = | -113/256 | HQ(15) = | -87/256 |
| HI(16) = | 49/256 | HQ(16) = | -127/256 |
| HI(17) = | 123/256 | HQ(17) = | 12/256 |
| HI(18) = | 20/256 | HQ(18) = | 106/256 |
| HI(19) = | -80/256 | HQ(19) = | 38/256 |
| HI(20) = | -46/256 | HQ(20) = | -52/256 |
| HI(21) = | 28/256 | HQ(21) = | -40/256 |
| HI(22) = | 32/256 | HQ(22) = | 11/256 |
| HI(23) = | -3/256 | HQ(23) = | 18/256 |
| HI(24) = | -9/256 | HQ(24) = | 0/256 |
| HI(25) = | 1/256 | HQ(25) = | -1/256 |
| HI(26) = | 0/256 | HQ(26) = | 3/256 |
| HI(27) = | -6/256 | HQ(27) = | -1/256 |
| HI(28) = | -2/256 | HQ(28) = | -4/256 |
| HI(29) = | 5/256 | HQ(29) = . | -2/256 |

**30.** Procédé selon la revendication 28 pour démoduler un signal de système B ou G dans lequel les coefficients des filtres adaptés des canaux I et Q sont les suivants :

| HI(0) = | 22/256 | HQ(0) = | 3/256 |
|---|---|---|---|
| HI(1) = | 18/256 | HQ(1) = | 9/256 |
| HI(2) = | 8/256 | HQ(2) = | 18/256 |
| HI(3) = | -3/256 | HQ(3) = | 29/256 |
| HI(4) = | -16/256 | HQ(4) = | 37/256 |
| HI(5) = | -30/256 | HQ(5) = | 38/256 |
| HI(6) = | -44/256 | HQ(6) = | 27/256 |
| HI(7) = | -56/256 | HQ(7) = | 5/256 |
| HI(8) = | -63/256 | HQ(8) = | -25/256 |
| HI(9) = | -57/256 | HQ(9) = | -55/256 |
| HI(10) = | -36/256 | HQ(10) = | -77/256 |
| HI(11) = | -2/256 | HQ(11) = | -86/256 |

(suite)

| | | | |
|---|---|---|---|
| HI(12) = | 39/256 | HQ(12) = | -79/256 |
| HI(13) = | 75/256 | HQ(13) = | -55/256 |
| HI(14) = | 97/256 | HQ(14) = | -20/256 |
| HI(15) = | 97/256 | HQ(15) = | 20/256 |
| HI(16) = | 75/256 | HQ(16) = | 55/256 |
| HI(17) = | 39/256 | HQ(17) = | 79/256 |
| HI(18) = | -3/256 | HQ(18) = | 86/256 |
| HI(19) = | -36/256 | HQ(19) = | 77/256 |
| HI(20) = | -56/256 | HQ(20) = | 54/256 |
| HI(21) = | -62/256 | HQ(21) = | 24/256 |
| HI(22) = | -56/256 | HQ(22) = | -5/256 |
| HI(23) = | -44/256 | HQ(23) = | -27/256 |
| HI(24) = | -30/256 | HQ(24) = | -38/256 |
| HI(25) = | -16/256 | HQ(25) = | -37/256 |
| HI(26) = | -3/256 | HQ(26) = | -29/256 |
| HI(27) = | 9/256 | HQ(27) = | -18/256 |
| HI(28) = | 18/256 | HQ(28) = | -9/256 |
| HI(29) = | 22/256 | HQ(29) = | -3/256 |

et les sorties des filtres adaptés sont appliquées à des égaliseurs directs, respectivement, pour les canaux I et Q ayant les coefficients :

| | | | |
|---|---|---|---|
| FFEI(0) = | -52/256 | FFEEQ(0) = | -52/256 |
| FFEI(1) = | 1 | FFEQ(1) = | 1 |
| FFEI(2) = | -52/256 | FFEQ(2) = | -52/256. |

Fig.1.

Fig.2.

Fig.3.

Fig.4.

Fig. 5.

Fig.6.

Fig.7.

Fig.8.

Fig.9.

Fig.10.

Fig.11.

Fig.12.

37

Fig.13.

Fig.15.

Fig.14.

Fig.16.

Fig.17.